(19) Europäisches Patentamt
European Patent Office
Office européen des brevets

(11) **EP 4 546 157 A2**

(12) **EUROPEAN PATENT APPLICATION**

(43) Date of publication:
**30.04.2025 Bulletin 2025/18**

(21) Application number: **24214409.5**

(22) Date of filing: **06.12.2022**

(51) International Patent Classification (IPC):
**G06F 16/31** (2019.01)

(52) Cooperative Patent Classification (CPC):
**G06F 9/50; G06F 16/2458; G06F 16/31**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.05.2022 CN 202210510751**
**29.06.2022 CN 202210764591**

(62) Document number(s) of the earlier application(s) in accordance with Art. 76 EPC:
**22941506.2**

(71) Applicant: **Huawei Cloud Computing Technologies Co., Ltd.**
**Guiyang, Guizhou 550025 (CN)**

(72) Inventors:
- **WANG, Nannan**
  **Guiyang, 550025 (CN)**
- **BIAN, Shengwei**
  **Guiyang, 550025 (CN)**

(74) Representative: **Huawei European IPR**
**Huawei Technologies Duesseldorf GmbH**
**Riesstraße 25**
**80992 München (DE)**

Remarks:
•This application was filed on 21-11-2024 as a divisional application to the application mentioned under INID code 62.
•Claims filed after the date of filing of the application / after the date of receipt of the divisional application (Rule 68(4) EPC).

(54) **RESOURCE SCHEDULING METHOD AND APPARATUS FOR ELASTIC-SEARCH CLUSTER, AND SYSTEM**

(57) This application provides a resource scheduling method and apparatus for an elastic-search cluster, and a system, and relates to the field of data storage technologies. According to a solution provided in this application, a data write rate of a target index can be calculated, and when the data write rate falls outside a target rate range, a quantity of resources of nodes occupied by a plurality of shards of the target index can be dynamically adjusted. Because both a data storage capacity of the target index and a maximum data write rate supported by the target index are related to the quantity of resources occupied by the plurality of shards, in the solution provided in this application, the data storage capacity and the maximum data write rate of the target index can be dynamically adjusted without changing a quantity of shards included in the target index. In this way, flexibility of data writing is effectively improved, and utilization of cluster resources is effectively improved.

EP 4 546 157 A2

**Description**

This application claims priorities to Chinese Patent Application No. 202210510751.2, filed on May 11, 2022 and entitled "DATA PROCESSING METHOD AND COMPUTER", and to Chinese Patent Application No. 202210764591.4, filed on June 29, 2022 and entitled "RESOURCE SCHEDULING METHOD AND APPARATUS FOR ELASTIC-SEARCH CLUSTER AND SYSTEM", both of which are incorporated herein by reference in their entireties.

**TECHNICAL FIELD**

This application relates to the field of data storage technologies, and in particular, to a resource scheduling method and apparatus for an elastic-search cluster, and a system.

**BACKGROUND**

Elastic-search (elastic-search, ES) is a distributed, highly scalable, and highly real-time data search engine that can provide data search services in clusters (clusters). A cluster usually includes a plurality of nodes (nodes), and each node may be a physical machine or a virtual machine (virtual machine, VM).

In an ES cluster, a minimum unit for data storage and search is a document. A logical space (that is, a container) used to store a document is referred to as an index (index). The index may be divided into a plurality of shards (shards), and at least one corresponding replica (replica) is created for each shard, to improve a data storage capacity of the index and achieve high availability. Each shard and at least one replica corresponding to the shard are distributed in different nodes. When a document needs to be stored in an index, a target shard for storing the document needs to be first calculated based on an identity (identity, ID) of the document and a quantity of shards included in the index, and then the document may be stored in the target shard, so that the target shard synchronizes the document to at least one replica corresponding to the target shard. When the document needs to be read from the index, the target shard in which the document is stored may be determined based on the ID of the document and the quantity of shards included in the index, and the document is read from the target shard.

Because a target shard needs to be calculated based on a quantity of shards included in an index, to store a document in the index and read the document from the index, the quantity of shards included in the index needs to be fixed. In other words, after the index is created, the quantity of shards included in the index cannot be modified. As a result, flexibility of data writing is low.

**SUMMARY**

This application provides a resource scheduling method and apparatus for an elastic-search cluster, and a system, to resolve a technical problem of low flexibility of data writing in the ES cluster.

According to a first aspect, a resource scheduling method for an ES cluster is provided. The ES cluster includes a plurality of first nodes, and the plurality of first nodes are configured to carry a plurality of shards of a target index. The method includes: calculating a data write rate of the target index; and adjusting, when the data write rate of the target index falls outside a target rate range, a quantity of resources of nodes occupied by the plurality of shards of the target index.

Because both a data storage capacity of the target index and a maximum data write rate supported by the target index are related to the quantity of resources occupied by the plurality of shards, in the solution provided in this application, the data storage capacity and the maximum data write rate of the target index can be dynamically adjusted without changing a quantity of shards included in the target index. In this way, flexibility of data writing is effectively improved, and utilization of cluster resources is effectively improved.

Optionally, a process of adjusting, when the data write rate of the target index falls outside the target rate range, the quantity of resources of nodes occupied by the plurality of shards may include: newly adding at least one second node to the ES cluster when the data write rate of the target index is greater than an upper limit of the target rate range; and migrating at least shard in the plurality of shards to the at least one second node.

The at least one second node is newly added to the ES cluster, so that the ES cluster can be scaled out, and the quantity of resources occupied by the target index increases. In this way, the data storage capacity and the maximum data write rate of the target index can be effectively improved, so that data write performance of the target index can match a current actual data write rate.

Optionally, before the at least one second node is newly added to the ES cluster, the method may further include: determining a quantity of the at least one to-be-newly-added second node based on a difference between the data write rate of the target index and the upper limit of the target rate range. The quantity is positively correlated with the difference, and a node specification of the at least one second node is a preset specification.

In the solution provided in this application, the at least one second node of a preset specification may be newly added to the ES cluster based on the difference of the write rate. A manner of newly adding the second node is simple, and efficiency is high.

Optionally, before the at least one second node is newly added to the ES cluster, the method may further include: determining a quantity of the at least one to-be-newly-added second node and a node specification of each second node based on a plurality of different candidate node specifications and a difference between the data write rate of the target index and the upper limit of the target rate range. The node specification of each second node is selected from the plurality of candidate node specifications.

If available nodes in a resource pool have a plurality of different node specifications, in the solution provided in this application, the at least one second node may be determined from the available nodes of the plurality of different node specifications based on a difference of the write rate. A manner of newly adding the second node is flexible. For example, in the solution provided in this application, the at least one second node may be determined based on costs of a specification of each candidate node and according to a cost-first policy. In this way, costs of a newly added node can be effectively reduced.

Optionally, a total quantity m1 of processor cores included in the at least one second node may satisfy: $m1 \geq (s1 - s2)/s0$. Herein, s1 is the data write rate of the target index, s2 is the upper limit of the target rate range, and s0 is a data write rate threshold of each processor core.

According to the foregoing formula, it can be ensured that after the at least one second node is newly added, data write performance of the plurality of first nodes and the at least one second node that are configured to carry the target index may match the data write rate of the target index.

Optionally, a resource used by the at least one second node may be a spot resource. Because costs of the spot resource are low, in the solution provided in this application, the spot resource may be preferentially used as a resource of a newly added node.

Optionally, the at least one shard may satisfy at least one of the following conditions: An amount of data written into the shard is less than a first threshold; and a total quantity of shards distributed in a first node in which the shard is located is greater than a second threshold.

It can be learned from the conditions that in the solution provided in this application, a shard with a small amount of written data may be selected for migration, and/or a shard in a first node with a large quantity of shards may be selected for migration. In this way, shard migration efficiency can be effectively improved, migration costs can be reduced, and it is ensured that quantities of shards in all first nodes are balanced.

Optionally, a process of adjusting, when the data write rate of the target index falls outside the target rate range, the quantity of resources of nodes occupied by the plurality of shards may include: determining at least one to-be-deleted first target node from the plurality of first nodes when the data write rate of the target index is less than a lower limit of the target rate range; migrating all shards distributed in the at least one first target node to a first node other than the at least one first target node; and deleting the at least one first target node.

If the data write rate of the target index is less than the lower limit of the target rate range, it indicates that data write performance of the plurality of first nodes in the ES cluster is not fully used. Therefore, the at least one first node is deleted, to reduce the capacity of the ES cluster, so as to effectively improve resource utilization of the ES cluster and reduce costs of the ES cluster.

Optionally, a total quantity of shards distributed in each first target node is less than a third threshold. In other words, in the solution provided in this application, a first node with a small quantity of shards may be deleted. In this way, it can be ensured that before the at least one first target node is deleted, a shard in the at least one first target node can be quickly migrated to another first node.

Optionally, a process of adjusting, when the data write rate of the target index falls outside the target rate range, the quantity of resources of nodes occupied by the plurality of shards may include: adjusting a node specification of at least one first node in the plurality of first nodes when the data write rate of the target index falls outside the target rate range.

According to the solution provided in this application, a node specification of a first node can be dynamically adjusted without changing the first node to which a shard belongs, to adjust the quantity of resources occupied by the target index.

Optionally, a process of adjusting the node specification of the at least one first node in the plurality of first nodes when the data write rate of the target index falls outside the target rate range may include: increasing a node specification of at least one second target node in the plurality of first nodes when the data write rate of the target index is greater than the upper limit of the target rate range. The at least one second target node may be a first node with a large quantity of shards in the ES cluster.

Optionally, a process of adjusting the node specification of the at least one first node in the plurality of first nodes when the data write rate of the target index falls outside the target rate range may include: reducing a node specification of at least one third target node in the plurality of first nodes when the data write rate of the target index is less than the lower limit of the target rate range. The at least one third target node may be a first node with a small quantity of shards in the ES cluster.

Optionally, a resource used by a fourth target node in the plurality of first nodes is a spot resource. The method may further include: newly adding at least one third node to the ES cluster when remaining available duration of the spot resource used by the fourth target node is less than a duration threshold; migrating all shards distributed in the fourth target node to the at least one third node; and deleting the third target node.

Because the costs of the spot resource are low, in the solution provided in this application, the spot resource may be used as the resource of the fourth target node, and when remaining use duration of the spot resource is less than the duration threshold, a shard in the fourth target node may be migrated to the newly added third node in time. In this way, the costs of the ES cluster can be effectively reduced while data read/write performance of the ES cluster is ensured.

Optionally, a resource used by the at least one third node may include an on-demand resource and/or a spot resource. The on-demand resource is a resource purchased based on a service requirement, and costs of the on-demand resource are higher than costs of the spot resource. For example, in the solution provided in this application, a type of the resource used by the at least one third node may be determined according to a cost-first policy.

Optionally, the ES cluster may further include a plurality of fourth nodes, and the plurality of fourth nodes are configured to carry a plurality of replicas of the target index. The method may further include: calculating a data read frequency of the target index; and adjusting a quantity of replicas included in the target index when the data read frequency of the target index falls outside a target frequency range.

In the solution provided in this application, the quantity of replicas included in the target index is adjusted, so that the quantity of replicas included in the target index can match the data read frequency. In this way, the resource utilization of the ES cluster can be effectively improved while the data read performance is ensured.

Optionally, a process of adjusting the quantity of replicas included in the target index when the data read frequency of the target index falls outside the target frequency range may include: newly adding at least one fifth node to the ES cluster when the data read frequency of the target index is greater than an upper limit of the target frequency range; and newly adding at least one replica of the target index to each fifth node.

A fifth node is newly added to the ES cluster and at least one replica is newly added to the fifth node, so that the data read performance of the ES cluster can be effectively improved.

Optionally, a process of adjusting the quantity of replicas included in the target index when the data read frequency of the target index falls outside the target frequency range may include: deleting a replica distributed in at least one fifth target node in the plurality of fourth nodes when the data read frequency of the target index is less than a lower limit of the target frequency range; and deleting the at least one fifth target node.

If the data read frequency of the target index is less than the lower limit of the target frequency range, it indicates that data read performance of the plurality of fourth nodes in the ES cluster is not fully used. Therefore, the at least one fifth target node is deleted, to reduce the capacity of the ES cluster, so as to effectively improve resource utilization of the ES cluster and reduce costs of the ES cluster.

According to a second aspect, a resource scheduling apparatus for an ES cluster is provided. The resource scheduling apparatus may include at least one module, and the at least one module may be configured to implement the resource scheduling method for the ES cluster according to the foregoing aspects.

According to a third aspect, a computing device cluster is provided. The computing device cluster includes at least one computing device, and each computing device includes a processor and a memory. The processor of the at least one computing device is configured to execute instructions stored in the memory of the at least one computing device, so that the computing device cluster performs the resource scheduling method for the ES cluster according to the foregoing aspects.

According to a fourth aspect, a computer-readable storage medium is provided. The computer-readable storage medium stores computer program instructions, and when the computer program instructions are executed by a computing device cluster, the computing device cluster performs the resource scheduling method for the ES cluster according to the foregoing aspects.

According to a fifth aspect, a computer program product including instructions is provided. When the instructions are run by a computing device cluster, the computing device cluster is enabled to perform the resource scheduling method for the ES cluster according to the foregoing aspects.

According to a sixth aspect, an ES system is provided. The ES system includes an ES cluster and a resource scheduling apparatus for the ES cluster, and the resource scheduling apparatus may be configured to implement the resource scheduling method for the ES cluster according to the foregoing aspects.

In conclusion, this application provides a resource scheduling method and apparatus for an elastic-search cluster, and a system, and belongs to the field of data storage technologies. According to the solution provided in this application, a data write rate of a target index can be calculated, and when the data write rate falls outside a target rate range, a quantity of resources of nodes occupied by a plurality of shards of the target index can be dynamically adjusted. Because both a data storage capacity of the target index and a maximum data write rate supported by the target index are related to the quantity of resources occupied by the plurality of shards, in the solution provided in this application, the data storage capacity and the maximum data write rate of the target index can be dynamically adjusted without changing a quantity of shards included in the target index. In this way, flexibility of data writing is effectively improved, and utilization of cluster resources is effectively improved.

**BRIEF DESCRIPTION OF DRAWINGS**

FIG. 1 is a diagram of a structure of an ES cluster according to an embodiment of this application;
FIG. 2 is a diagram of an application scenario of a resource scheduling method for an ES cluster according to an embodiment of this application;
FIG. 3 is a flowchart of a resource scheduling method for an ES cluster according to an embodiment of this application;
FIG. 4 is a flowchart of a method for scaling out an ES cluster according to an embodiment of this application;
FIG. 5 is a diagram of newly adding a second node to an AASS component according to an embodiment of this application;
FIG. 6 is a diagram of migrating a shard by a client proxy component according to an embodiment of this application;
FIG. 7 is a diagram of a scaled-out ES cluster according to an embodiment of this application;
FIG. 8 is a flowchart of a method for scaling in an ES cluster according to an embodiment of this application;
FIG. 9 is a diagram in which an AASS component indicates a client proxy component to start a deletion procedure according to an embodiment of this application;
FIG. 10 is another diagram of migrating a shard by a client proxy component according to an embodiment of this application;
FIG. 11 is a diagram of deleting a first target node by an AASS component according to an embodiment of this application;
FIG. 12 is a diagram of data write performance of first nodes of different node specifications according to an embodiment of this application;
FIG. 13 is another flowchart of a resource scheduling method for an ES cluster according to an embodiment of this application;
FIG. 14 is a diagram of determining a node replacement policy by a resource scheduling apparatus according to an embodiment of this application;
FIG. 15 is a diagram of newly adding a third node to an AASS component according to an embodiment of this application;
FIG. 16 is a diagram of deleting a fourth target node by an AASS component according to an embodiment of this application;
FIG. 17 is a diagram of newly adding a fifth node to an AASS component according to an embodiment of this application;
FIG. 18 is a diagram of a data read frequency of a target index according to an embodiment of this application;
FIG. 19 is a diagram of a data write frequency of a target index according to an embodiment of this application;
FIG. 20 is a diagram of a structure of a resource scheduling apparatus for an ES cluster according to an embodiment of this application;
FIG. 21 is a diagram of a structure of a computing device according to an embodiment of this application; and
FIG. 22 is a diagram of a structure of a computing device cluster according to an embodiment of this application.

**DESCRIPTION OF EMBODIMENTS**

The following describes in detail a resource scheduling method and apparatus for an ES cluster, and a system provided in embodiments of this application with reference to accompanying drawings.

The following terms in embodiments of this application are first interpreted.

ES: The ES is a distributed, highly scalable, and highly real-time data search engine developed based on Lucene (a full-text search engine), which can provide data search services in clusters.

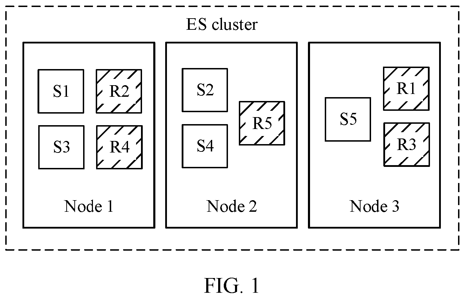

ES cluster: The ES cluster is a set of a plurality of nodes (nodes) and can independently provide search services. For example, as shown in FIG. 1, the ES cluster may include three nodes in total: a node 1 to a node 3.

Node: The node may also be referred to as an ES server, an ES instance, or a computing instance, and includes basic physical resources such as a processor, a memory, and a disk. A node can be a physical machine, a VM, or a container in a physical machine.

Index: The index is a logical space used to store data, and is equivalent to a database.

Shard: The shard is obtained by dividing an index, and is used to carry data in the index. Each index may be divided into a plurality of shards, and the plurality of shards can be distributed in different nodes. This can effectively improve a data storage capacity of the index. Each shard may be a Lucene instance. For example, as shown in FIG. 1, the index may be divided into five shards in total: a shard S1 to a shard S5. The shard S1 and a shard S3 are distributed in the node 1, a shard S2 and a shard S4 are distributed in a node 2, and the shard S5 is distributed in the node 3.

Replica: The replica is obtained by replicating a shard, and is a backup of the shard. Each shard may have one or more replicas, and each replica and the shard corresponding to the replica are distributed in different nodes. For example, as shown in FIG. 1, the shard S1 to the shard S5 each have one replica, and replicas of the shard S1 to the shard S5 are a replica R1 to a replica R5 sequentially. The replica R1 and a replica R3 are distributed in the node 3, a replica R2 and a replica R4 are distributed in the node 1, and the replica R5 is distributed in the node 2.

Because data stored in a replica is the same as data stored in a shard, and the replica can process a data query (query) request, that is, provide a data query service, a data query throughput can be effectively improved, and high availability can be achieved. In a scenario in which a replica is created for a shard, the shard may also be referred to as a primary shard (primary shard), and the replica may also be referred to as a replica shard (replica shard).

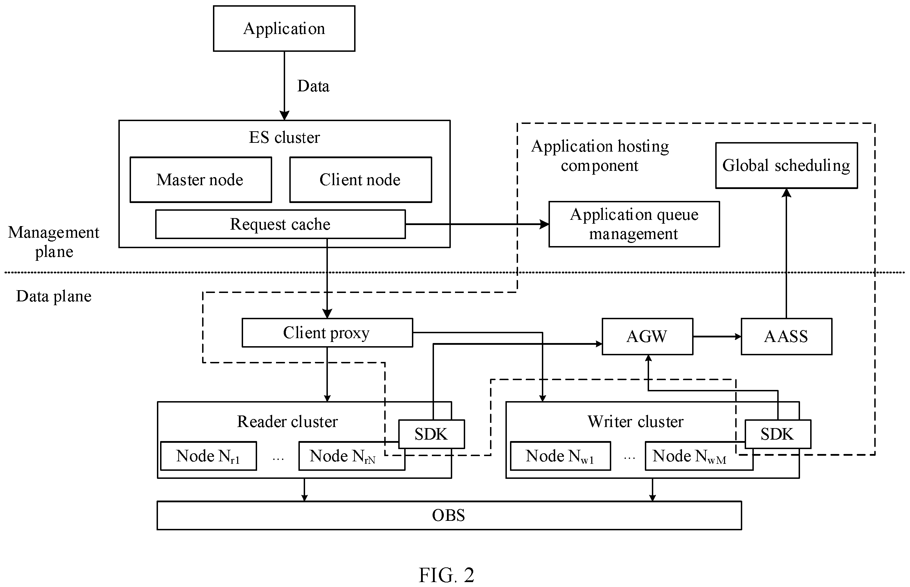

FIG. 2 is a diagram of an application scenario of a resource scheduling method for an ES cluster according to an embodiment of this application. As shown in FIG. 2, the application scenario includes an ES cluster and an application hosting component. In addition, the application scenario may be divided into a management plane and a data plane. The management plane of the ES cluster may include a master node (master node), a client node (client node), and a request cache (request cache). The master node is configured to maintain a status of the ES cluster, for example, create and delete an index. The client node is mainly responsible for data storage, and processing a data index request and a data read request of an application (also referred to as a client). It may be understood that the master node may also have functions of the client node. The request cache is used to cache a data index request and a data read request. The data index request is used to request to write data into an index, and may also be referred to as a data write request. The data read request is used to request to read data in an index, and may also be referred to as a data query request.

The data plane of the ES cluster may include a reader (reader) cluster and a writer (writer) cluster. The reader cluster includes N nodes in total (from a node $N_{r1}$ to a node $N_{rN}$), where N is an integer greater than 1. One or more replicas of an index may be distributed in each node in the reader cluster, and the reader cluster may be used to process a data read request. The writer cluster includes M nodes in total (from a node $N_{w1}$ to a node $N_{wM}$), where M is an integer greater than 1. One or more shards of an index may be distributed in each node in the writer cluster, and the writer cluster may be used to process a data write request. In other words, when data needs to be written to an index, the data may be written to only a shard distributed in a writer cluster, and the shard in the writer cluster synchronizes the data to one or more replicas in a reader cluster. When data is read (data is queried) from an index, the data may be read from only a replica distributed in a reader cluster. In this way, data read/write splitting can be implemented. This effectively improves data read/write efficiency.

The application hosting component may also be referred to as a smart cloud APP elastic engine (smart cloud APP elastic engine, Scase) service component, which can provide a global application hosting service. Still as shown in FIG. 2, the application hosting component may include: a global scheduling component and an application queue management component that are located on the management plane, and a client proxy (client proxy) component, an application gateway (application gateway, AGW), an application autoscale service (application autoscale service, AASS) component, and a server (server) software development kit (software development kit, SDK) that are located on the data plane. In the application scenario shown in FIG. 2, each shard in the writer cluster and each replica in the reader cluster can be hosted by a search process (also referred to as a Lucene process or an application process). The search process integrates the server SDK. Functions of the components in the application hosting component are as follows:

Server SDK: The server SDK is used to control start or stop of a search process and report monitoring data of a search service. The monitoring data may include: a read/write amount per second, a status of the search process, a quantity of threads included in the search process, and the like.

Application queue management component: The application queue management component is responsible for hosting a search process and managing a queue size of the search process.

AGW: The AGW is used to control a search process, for example, collect monitoring data collected by the server SDK and deliver a control instruction to the server SDK, to enable the server SDK to control start and stop of the search process and migration of a shard or a replica.

AASS component: The AASS component monitors traffic (including an amount of written data and a quantity of data read requests) of a search process, and coordinates application metrics and underlying resources of the cluster, to implement an application-driven elastic service.

Client proxy component: The client proxy component is used to perform distribution control on data write requests and data read requests, that is, distribute the data write requests to each node in the writer cluster, and distribute the data read requests to each node in the reader cluster.

Global scheduling component: The global scheduling component provides a global resource view of a resource pool and determines a combination mode of nodes in the ES cluster based on a node specification of an available node in the resource pool and according to a preset policy (for example, a cost-first policy).

Still as shown in FIG. 2, the application scenario may further include a storage service component, for example, an object storage service (object storage service, OBS) component. The storage service component is used to implement data synchronization between a shard and a replica.

An embodiment of this application provides a resource scheduling method for an ES cluster. The ES cluster includes a plurality of first nodes, and a plurality of shards of a target index are distributed in the plurality of first nodes. At least one shard of the target index may be distributed in each first node. It may be understood that the ES cluster may carry at least one index, and the target index may be any one of the at least one index. It may be further understood that the plurality of shards of the target index are all primary shards, and the plurality of first nodes may form a writer cluster of the target index. For example, the plurality of first nodes may be the node $N_{wl}$ to the node $N_{wM}$ in FIG. 2.

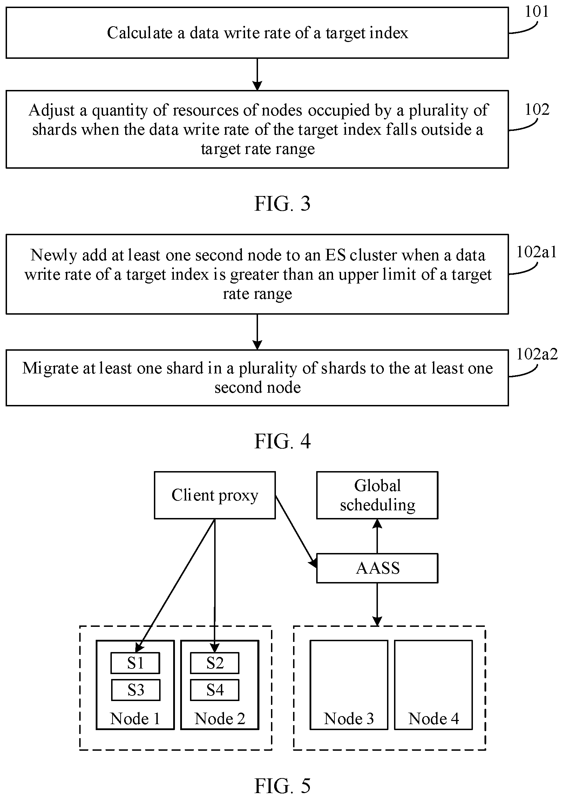

The method provided in embodiments of this application may be applied to a resource scheduling apparatus. The resource scheduling apparatus may be the application hosting component in the application scenario shown in FIG. 2. As shown in FIG. 3, the resource scheduling method includes the following steps.

Step 101: Calculate a data write rate of a target index.

In this embodiment of this application, a resource scheduling apparatus may calculate the data write rate of the target index in real time or periodically. The data write rate calculated by the resource scheduling apparatus at each statistical moment may be an average data write rate in first target duration before the statistical moment, that is, a ratio of a total amount of data that is received in the first target duration and that needs to be written into the target index to the first target duration. A unit of the data write rate may be bits per second (bits per second, bps).

Optionally, the resource scheduling apparatus may collect statistics on a quantity of data write requests for the target index that are received in the first target duration, and collect statistics on an amount of data written as requested by each data write request. The resource scheduling apparatus may accumulate amounts of data that is requested by the data write requests received in the first target duration, to obtain a total amount of data that is received in the first target duration and that needs to be written into the target index. Then, the resource scheduling apparatus may calculate a ratio of the total amount of data to the first target duration, and determine the ratio as the data write rate of the target index.

For example, if the resource scheduling apparatus is the application hosting component shown in FIG. 2, an AGW or a client proxy component may collect statistics on the quantity of data write requests for the target index that are received in the first target duration, and collect statistics on the amount of data written as requested by each data write request. An AASS component may calculate the data write rate of the target index based on data collected by the AGW or the client proxy component.

Step 102: Adjust, when the data write rate of the target index falls outside a target rate range, a quantity of resources of nodes occupied by a plurality of shards.

The resource scheduling apparatus pre-stores the target rate range, and the target rate range may be a range of a data write rate that can be currently supported by the target index. Because the target index is currently carried by a plurality of first nodes, the target rate range may also be understood as a range of a data write rate that can be supported by the plurality of first nodes. In addition, the target rate range may be determined based on node specifications of the plurality of first nodes.

A measurement indicator of a node specification may include at least a quantity of processor cores included in a node. Alternatively, the measurement indicator may further include a memory size of a node. If a node has x processor cores and a memory is y gigabytes (gigabytes, G), a node specification of the node may be represented as xUyG, where x and y are positive integers. U is an abbreviation of a unit (unit), is a unit indicating an external size of a server, and may indicate a quantity of processor cores in this embodiment of this application.

It may be understood that a higher node specification of the first node indicates a higher maximum data write rate that can be supported by the first node, that is, better data write performance of the first node. Therefore, the resource scheduling apparatus may determine the target rate range based on the node specifications of the plurality of first nodes.

Optionally, the resource scheduling apparatus may obtain a preset data write rate threshold s0 of each processor core, namely, a single-core data write rate. Then, the target rate range may be determined based on a product of the data write rate threshold s0 and a total quantity m of processor cores included in the plurality of first nodes. For example, the target rate range may be (s0 × m) ± Δs. Herein, Δs is a preset write rate fluctuation value, and may be a number greater than or equal to 0. The data write rate threshold s0 may be configured by an application (a client), and may be obtained by testing data write performance of a single processor core by the application.

For example, if a quantity of resources that need to be occupied when a single search process of an application runs is 1U4G, and when the single search process runs in a node of 1U4G, a maximum data write rate supported by the node is 2 megabits per second (Mbps), the application may configure the data write rate threshold s0 of each processor core to 2 Mbps. If a quantity of resources that need to be occupied when a single search process of an application runs is 2U8G, and when the single search process runs in a node of 2U8G, a maximum data write rate supported by the node is 2 Mbps, the application may configure the data write rate threshold s0 of each processor core to 1 Mbps.

It is assumed that the data write rate threshold s0 of each processor core configured in the resource scheduling apparatus is 2 Mbps. The ES cluster includes ten first nodes, and each first node includes four processor cores, that is, a total quantity m of processor cores included in the ten first nodes is 40. Correspondingly, the resource scheduling apparatus may determine that the target rate range is (80±Δs) Mbps. If the preset write rate fluctuation value Δs is 0, the target rate range may be equal to 80 Mbps.

When the data write rate of the target index falls outside the target rate range, the resource scheduling apparatus may determine that data write performance of the plurality of first nodes does not match the data write rate of the target index. If the data write rate of the target index is greater than an upper limit of the target rate range, the resource scheduling apparatus may determine that the data write performance of the plurality of first nodes cannot support a current actual data write rate of the target index, that is, data may be stacked, and cannot be effectively written into the target index in time. If the data write rate of the target index is less than a lower limit of the target rate range, the resource scheduling apparatus may determine that the data write performance of the plurality of first nodes is not fully used, that is, resource utilization of the ES cluster is low.

Based on this, the resource scheduling apparatus may dynamically adjust the quantity of resources occupied by the plurality of shards of the target index, so that the quantity of resources occupied by the plurality of shards can match the current actual data write rate of the target index. In this way, the resource utilization of the ES cluster can be effectively improved while the data write performance is high, that is, an elastic policy based on write quality of service (quality of service, QoS) is implemented.

In a first optional implementation, the resource scheduling apparatus may adjust a quantity of nodes occupied by the plurality of shards of the target index, to adjust the quantity of resources occupied by the plurality of shards. In a second optional implementation, the resource scheduling apparatus may adjust a node specification of at least one first node in the plurality of first nodes, to adjust the quantity of resources occupied by the plurality of shards.

The following uses the first implementation as an example to describe an implementation process of step 102. As shown in FIG. 4, step 102 may include the following steps.

Step 102a1: Newly add at least one second node to the ES cluster when the data write rate of the target index is greater than the upper limit of the target rate range.

When the data write rate of the target index is greater than the upper limit of the target rate range, to increase the quantity of resources occupied by the target index, the resource scheduling apparatus may newly add, to the ES cluster, the at least one second node configured to carry a shard of the target index.

In a first example, the resource scheduling apparatus may determine a quantity of the at least one to-be-newly-added second node based on a difference between the data write rate of the target index and the upper limit of the target rate range. The quantity of the at least one second node is positively correlated with the difference. In addition, a node specification of each of the at least one second node is a preset specification, that is, the at least one second node has a same node specification. In the first example, a node specification of each to-be-newly-added node is the preset specification. Therefore, the resource scheduling apparatus may directly determine, based on the difference of the write rate, the quantity of the at least one to-be-newly-added second node. A manner of newly adding the second node is simple, and efficiency is high.

In the first example, if a quantity of processor cores in the preset specification is m0, a quantity n1 of the at least one to-be-newly-added second node may satisfy:

$$n1 \geq (s1 - s2)/(s0 \times m0) \quad \text{Formula (1)}$$

Herein, s1 is the data write rate of the target index, s2 is the upper limit of the target rate range, and s0 is the data write rate threshold of each processor core. Formula (1) may also be transformed into $(n1 \times m0) \geq (s1 - s2)/s0$, where $(n1 \times m0)$ is a total quantity of processor cores included in the at least one second node.

In a second example, if available nodes in a resource pool (for example, a cloud platform) have a plurality of different candidate node specifications, the resource scheduling apparatus may determine, based on the plurality of candidate node specifications and the difference between the data write rate of the target index and the upper limit of the target rate range, the quantity of the at least one to-be-newly-added second node and a node specification of each second node. The node specification of each second node is selected from the plurality of candidate node specifications, and node specifications of different second nodes may be the same or may be different. In the second example, the total quantity m1 of processor cores included in the at least one newly added second node may satisfy:

$$m1 \geq (s1 - s2)/s0 \quad \text{Formula (2)}$$

Optionally, the resource scheduling apparatus may determine the quantity of the at least one second node and the node specification of each second node based on costs of a specification of each candidate node and according to a cost-first policy. In this way, costs of a newly added node can be effectively reduced while data write performance of the ES cluster is improved.

For example, the resource scheduling apparatus may first determine, from the available nodes in the resource pool, a plurality of node combination manners that can satisfy Formula (2), where in different node combination manners, quantities of second nodes are different, and/or specifications of the at least one second node are different. Then, the resource scheduling apparatus may select a node combination manner with lowest costs from the plurality of node combination manners, and newly add the at least one second node in the node combination manner with the lowest costs.

It is assumed that the data write rate s1 of the target index is 100 Mbps, the upper limit s2 of the target rate range is 80 Mbps, and the data write rate threshold s0 of each processor core is 2 Mbps. The resource scheduling apparatus may determine, according to Formula (2), that the total quantity m1 of processor cores included in the at least one to-be-newly-added second node needs to be greater than or equal to 10. If a node specification of each to-be-newly-added second node is a preset specification: 2U8G, that is, a quantity m0 of processor cores in each second node is equal to 2, the resource scheduling apparatus may newly add five second nodes of 2U8G to the ES cluster.

It is assumed that the available nodes in the resource pool have two candidate node specifications: 2U8G and 4U16G, and costs of one node of 4U16G are lower than costs of two nodes of 2U8G. The resource scheduling apparatus may newly add two second nodes of 4U16G and one second node of 2U8G to the ES cluster according to the cost-first policy.

Optionally, if the available nodes in the resource pool include a node that uses a spot (spot) resource, because costs of the spot resource are low, in step 102a1, the resource scheduling apparatus may preferentially select the node that uses the spot resource as the to-be-newly-added second node. In other words, a resource used by the at least one second node may be the spot resource. The node that uses the spot resource may also be referred to as a spot instance.

Step 102a2: Migrate at least one shard in the plurality of shards to the at least one second node.

After newly adding the at least one second node to the ES cluster, the resource scheduling apparatus may migrate the at least one shard of the target index to the at least one second node. Each second node may carry one or more shards of the target index.

Optionally, the at least one shard migrated by the resource scheduling apparatus may satisfy at least one of the following conditions: An amount of data written into the shard is less than a first threshold; and a total quantity of shards distributed in a first node in which the shard is located is greater than a second threshold.

It can be learned from the conditions that the resource scheduling apparatus may select a shard with a small amount of written data for migration, and/or select a shard in a first node with a large quantity of shards for migration. In this way, shard migration efficiency can be effectively improved, migration costs can be reduced, and it can be ensured that quantities of shards in all first nodes are balanced.

The first threshold and the second threshold may be fixed values preconfigured in the resource scheduling apparatus. Alternatively, the first threshold may be determined based on an amount of data written into each shard of the target index, for example, may be an average value or a lower quartile of amounts of data written into all shards of the target index. The second threshold may be determined based on the quantities of shards in all first nodes, for example, may be an average value or an upper quartile of the quantities of shards in all the first nodes.

It may be understood that the resource scheduling apparatus may alternatively determine at least one to-be-migrated shard in another manner. For example, the resource scheduling apparatus may randomly select the at least one to-be-migrated shard from the plurality of shards of the target index.

It may be further understood that after determining the at least one to-be-migrated shard, the resource scheduling apparatus may migrate the at least one shard to the at least one newly added second node according to a load balancing policy.

The following describes an implementation process of step 102a1 and step 102a2 by using an example in which the resource scheduling apparatus is the application hosting component shown in FIG. 2.

First, after detecting that the data write rate of the target index is greater than the upper limit of the target rate range, the AASS component may determine a scaled-out policy. The scaled-out policy includes the quantity of the at least one to-be-newly-added second node and the node specification of each to-be-newly-added second node. For example, the AASS component may determine the scaled-out policy based on the difference between the data write rate and the upper limit of the target rate range. Alternatively, the AASS component may report the difference to a global scheduling component, and the global scheduling component may determine the scaled-out policy based on the difference and the plurality of candidate node specifications in the resource pool, and deliver the scaled-out policy to the AASS component.

Then, according to the scaled-out policy, the AASS component can newly add the at least one second node to the ES cluster and adjust a deployment policy of a shard. The deployment policy of a shard may be a correspondence between each shard of the target index and a node in which the shard is distributed, namely, a mapping relationship between a shard and a node.

For example, as shown in FIG. 5, it is assumed that the target index includes four shards in total: a shard S1 to a shard S4, and a reader cluster used to carry the four shards includes two first nodes in total: a node 1 and a node 2. The shard S1 and a shard S3 are distributed in the node 1, and a shard S2 and the shard S4 are distributed in the node 2. If the AASS component determines that the data write rate of the target index is greater than the upper limit of the target rate range, two second nodes in total, namely, a node 3 and a node 4, may be newly added to the reader cluster. In addition, the AASS component may adjust the deployment policy of a shard as follows: The shard S3 is deployed in the node 3, and the shard S4 is deployed in the node 4.

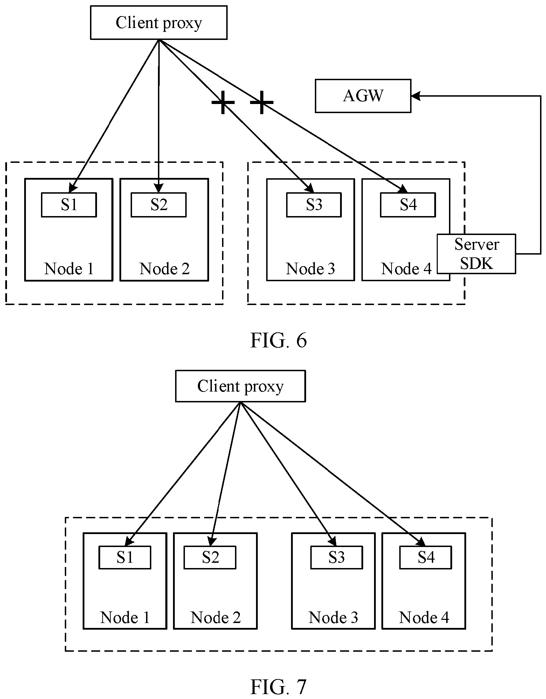

Further, the client proxy component may interconnect with the AASS component in real time to obtain a service status of the newly added second node, and synchronize the deployment policy of a shard. After determining that service statuses of all the newly added second nodes are a ready (ready) state, the client proxy component may migrate the at least one shard to the at least one newly added second node according to the deployment policy of a shard. For example, as shown in FIG. 6, the client proxy component may migrate the shard S3 to the node 3, and migrate the shard S4 to the node 4.

After completing shard migration, the client proxy component further needs to update a distribution policy, and distribute data write requests according to an updated distribution policy. The distribution policy is a policy of distributing a data write request to each node configured to carry the target index. For example, as shown in FIG. 6, before migrating the shard S3 and the shard S4, the client proxy component may distribute data write requests to the node 1 and the node 2 according to the distribution policy. In addition, it can be learned from FIG. 6 that, in a process of migrating the shard S3 and the shard S4, the client proxy component does not distribute data write requests to the node 3 and the node 4. As shown in FIG. 7, after completing migration of the shard S3 and the shard S4, the client proxy component may distribute data write requests to the node 1, the node 2, the node 3, and the node 4 according to an updated distribution policy.

In the foregoing scaled-out process, it takes about three to five minutes to newly add the at least one second node, and it takes about one minute to perform shard migration and traffic switching.

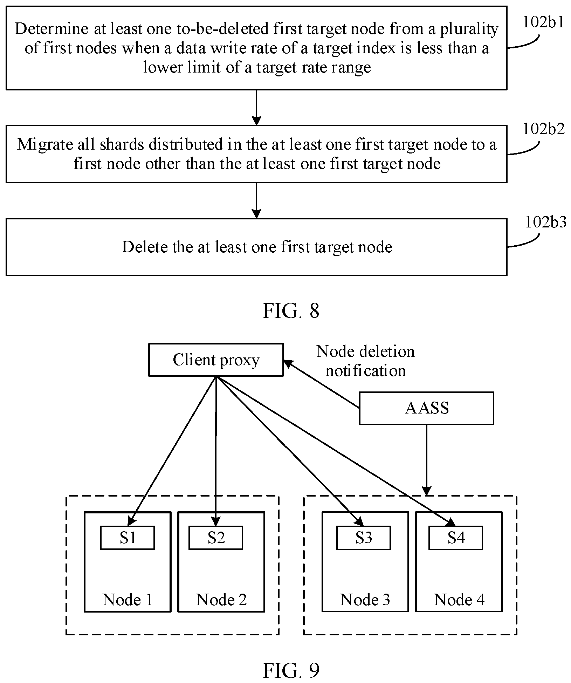

FIG. 8 is a flowchart of a method for scaling in an ES cluster according to an embodiment of this application. As shown in FIG. 8, step 102 may alternatively include the following steps.

Step 102b1: Determine at least one to-be-deleted first target node from the plurality of first nodes when the data write rate of the target index is less than the lower limit of the target rate range.

When the data write rate of the target index is less than the lower limit of the target rate range, to improve resource utilization of the ES cluster and reduce costs of the ES cluster, the resource scheduling apparatus may determine the at least one to-be-deleted first target node from the plurality of first nodes.

Optionally, a total quantity of shards distributed in each first target node may be less than a third threshold. In other words, the resource scheduling apparatus may delete a first node with a small quantity of shards. In this way, it can be ensured that before the at least one first target node is deleted, a shard in the at least one first target node can be quickly migrated to another first node.

The third threshold may be a fixed value preconfigured in the resource scheduling apparatus. Alternatively, the third threshold may be determined based on quantities of shards in all first nodes, for example, may be an average value or a lower quartile of the quantities of shards in all the first nodes.

In a first example, if a node specification of each first node in the ES cluster is a preset specification, the resource scheduling apparatus may determine a quantity of the at least one to-be-deleted first target node based on a difference between the data write rate of the target index and the lower limit of the target rate range. The quantity of the at least one first target node is positively correlated with the difference.

If a quantity of processor cores in the preset specification is m0, a quantity n2 of the at least one to-be-deleted first target node may satisfy:

$$n2 \leq (s3 - s1)/(s0 \times m0) \quad \text{Formula (3)}$$

Herein, s1 is the data write rate of the target index, s3 is the lower limit of the target rate range, and s0 is the data write rate threshold of each processor core. Formula (3) may also be transformed into $(n2 \times m0) \leq (s3 - s1)/s0$, where $(n2 \times m0)$ is a total quantity of processor cores included in the at least one first target node.

It may be understood that the lower limit s3 of the target rate range may be less than the upper limit s2 of the target rate range, or the lower limit s3 of the target rate range may be equal to the upper limit s2, that is, the target rate range may be a rate threshold.

In a second example, if node specifications of all first nodes are not completely the same, the resource scheduling apparatus may determine the at least one to-be-deleted first target node based on the node specifications of all the first nodes and a difference between the data write rate of the target index and the lower limit of the target rate range. In addition, a total quantity m2 of processor cores included in the at least one first target node may satisfy:

$$m2 \leq (s3 - s1)/s0 \quad \text{Formula (4)}$$

Optionally, in the second example, the resource scheduling apparatus may further determine the at least one to-be-deleted first target node based on costs of first nodes of different node specifications according to a cost-first policy, to effectively reduce costs of the ES cluster.

For example, the resource scheduling apparatus may first determine a plurality of node combination manners that can satisfy Formula (4), where in different node combination manners, quantities of first nodes are different, and/or specifications of the at least one first node are different. Then, the resource scheduling apparatus may select a node combination manner with highest costs from the plurality of node combination manners, and determine the node combination manner with the highest costs as a combination manner of the at least one to-be-deleted first target node.

Step 102b2: Migrate all shards distributed in the at least one first target node to a first node other than the at least one first target node.

After determining the at least one to-be-deleted first target node, the resource scheduling apparatus may migrate all shards distributed in the at least one first target node to a first node other than the at least one first target node. For example, the resource scheduling apparatus may migrate a shard according to a load balancing policy, to ensure that after the shard is migrated, quantities of shards in all first nodes except the at least one first target node are balanced.

Step 102b3: Delete the at least one first target node.

After completing shard migration, the resource scheduling apparatus may delete the at least one first target node. In this way, a capacity of the ES cluster can be effectively reduced, that is, the ES cluster is scaled in, to effectively reduce costs of the ES cluster.

The following describes an implementation process of step 102b1 to step 102b3 by using an example in which the resource scheduling apparatus is the application hosting component shown in FIG. 2.

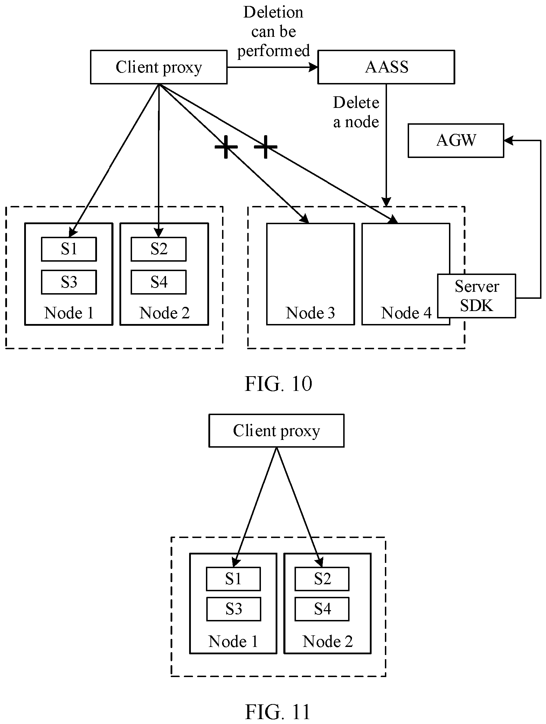

First, after detecting that the data write rate of the target index is less than the lower limit of the target rate range, the AASS component may determine a scaled-in policy. The scaled-in policy includes the at least one to-be-deleted first target node and a deployment policy of a shard in the at least one first target node. Then, as shown in FIG. 9, the AASS component may send a node deletion notification to the client proxy component, to indicate the client proxy component to initiate a deletion procedure. After receiving the node deletion notification, the client proxy component may synchronize the scaled-in policy in the AASS component, and migrate each shard in the at least one first target node to another first node according to the scaled-in policy. For example, as shown in FIG. 10, the client proxy component may migrate a shard S3 in a node 3 to a node 1, and migrate a shard S4 in a node 4 to a node 2.

After completing shard migration, the client proxy component may cut off service flows of the node 3 and the node 4. In addition, the client proxy component may notify the AASS component that the at least one first target node can be deleted. The AASS component may monitor a service status of the at least one first target node by using the AGW. After determining that data and a process in the at least one first target node are deleted, the AASS component may delete the at least one first target node. For example, as shown in FIG. 10 and FIG. 11, the AASS component may delete the node 3 and the node 4.

It may be understood that, in this embodiment of this application, the AASS component may directly invoke an interface of an elastic computer service (elastic computer service, ECS) or an autoscaling service (autoscaling service, AS) of the ES cluster to newly add a second node or delete a first target node. Because a deletion script can be executed in a process of deleting a node by invoking the interface of the ECS, the ECS may execute a deletion callback preset in a server SDK, to delete the data and the process in the first target node. The AGW may update a service status of a node by using the server SDK. The service status includes a status of a process and a quantity of sessions in the node. After determining, by monitoring the AGW, that the data and the process in the node are deleted, the AASS component invokes the interface of the ECS to automatically delete the first target node. Alternatively, the AGW may invoke a deletion function, to delete the data and the process in the first target node. After the data and the process in the node are deleted, the interface of the ECS is invoked to delete the first target node.

The following describes an implementation process of step 102 by using the foregoing second implementation (adjusting the node specification of the at least one first node in the plurality of first nodes occupied by the target index) as an example.

In the second implementation, all the plurality of first nodes in the ES cluster may use a serverless (serverless) architecture. When detecting that the data write rate of the target index falls outside the target rate range, the resource scheduling apparatus may adjust the node specification of the at least one first node in the plurality of first nodes. In other words, the resource scheduling apparatus does not need to adjust a quantity of nodes used to carry the target index, and does not need to migrate a shard of the target index, but can dynamically adjust the node specification of the at least one first node, to adjust a quantity of resources occupied by the target index.

As described above, the measurement indicator of the node specification may include at least a quantity of processor cores in a node. In this way, that the resource scheduling apparatus adjusts a node specification of a second target node may be adjusting a quantity of processor cores included in the second target node. If the measurement indicator of the node specification further includes a memory size of the node, that the node specification of the second target node is adjusted may be adjusting a memory size and the quantity of processor cores included in the second target node.

In the second implementation, if the resource scheduling apparatus determines that the data write rate of the target index is greater than the upper limit of the target rate range, a node specification of at least one second target node in the plurality of first nodes may be increased.

A total quantity of shards distributed in each second target node may be greater than a fourth threshold. In other words, the resource scheduling apparatus may increase a node specification of a first node with a large quantity of shards. The fourth threshold may be a fixed value preconfigured in the resource scheduling apparatus. Alternatively, the fourth threshold may be determined based on quantities of shards in all first nodes, for example, may be an average value or an upper quartile of the quantities of shards in all the first nodes.

It may be understood that the at least one second target node may alternatively be determined in another manner. For example, the resource scheduling apparatus may randomly select the at least one second target node from the plurality of first nodes. Alternatively, the resource scheduling apparatus may determine all the plurality of first nodes as the second target nodes, that is, the resource scheduling apparatus may increase a node specification of each first node.

In the second implementation, if the resource scheduling apparatus determines that the data write rate of the target index is less than the lower limit of the target rate range, a node specification of at least one third target node in the plurality of first nodes may be reduced.

A total quantity of shards distributed in each third target node may be less than a fifth threshold. In other words, the resource scheduling apparatus may reduce a node specification of a first node with a small quantity of shards. The fifth threshold may be a fixed value preconfigured in the resource scheduling apparatus. Alternatively, the fifth threshold may be determined based on quantities of shards in all first nodes, for example, may be an average value or a lower quartile of the quantities of shards in all the first nodes.

It may be understood that the at least one third target node may alternatively be determined in another manner. For example, the resource scheduling apparatus may randomly select the at least one third target node from the plurality of first nodes. Alternatively, the resource scheduling apparatus may determine all the plurality of first nodes as the third target nodes, that is, the resource scheduling apparatus may reduce a node specification of each first node.

It may be further understood that the resource scheduling apparatus may adjust a node specification of the at least one second target node (or the at least one third target node) based on the data write rate s1 of the target index. In addition, the total quantity m3 of processor cores included in the plurality of first nodes whose node specifications are adjusted may satisfy: $m3 \geq s1/s0$ Formula (5)

For example, it is assumed that the data write rate threshold s0 of each processor core is 2 Mbps, and the ES cluster includes ten first nodes whose node specifications are 4U16G. In this way, the total quantity of processor cores included in the ten first nodes is 40. If the data write rate s1 of the target index is 100 Mbps, the resource scheduling apparatus may determine, according to Formula (5), that a requirement of the data write rate s1 of the target index can be satisfied only when the total quantity of processor cores included in the ten first nodes is greater than or equal to 50. Based on this, the resource scheduling apparatus may adjust node specifications of three first nodes in the ES cluster from 4U16G to 8U32G. In this case, the total quantity m3 of processor cores included in the plurality of first nodes whose node specifications are adjusted is 52.

If the data write rate s1 of the target index is 40 Mbps, the resource scheduling apparatus may determine, according to Formula (5), that a requirement of the data write rate s1 of the target index can be satisfied when the total quantity of processor cores included in the ten first nodes is greater than or equal to 20. Based on this, the resource scheduling apparatus may adjust node specifications of the ten first nodes in the ES cluster from 4U16G to 2U8G. In this case, the total quantity m3 of processor cores included in the plurality of first nodes whose node specifications are adjusted is 20.

Optionally, when detecting that the data write rate of the target index falls outside the target rate range, the resource scheduling apparatus may adjust, in either of the first implementation and the second implementation, the quantity of resources occupied by the plurality of shards of the target index. Alternatively, the resource scheduling apparatus may combine the two implementations, to adjust the quantity of resources occupied by the plurality of shards of the target index. In other words, the resource scheduling apparatus may adjust a quantity of nodes used to carry the target index and adjust the node specification of the at least one first node.

In this embodiment of this application, a correspondence between a node specification and node performance may be preconfigured in the resource scheduling apparatus, and node performance corresponding to different node specifications is recorded in the correspondence. The node performance may be represented by using the following parameters: a quantity of shards that can be carried by a node and a maximum data write rate supported by a node. When detecting that the data write rate of the target index falls outside the target rate range, based on the correspondence, the resource scheduling apparatus may determine a node specification of a to-be-newly-added second node, and/or adjust the node specification of the first node.

It may be understood that, for search processes (including an index process and a read process) of applications of different types, amounts of resources required by nodes to run the search processes are different. For example, a quantity of resources required for running a single search process of an application 1 is 1U2G, and a quantity of resources required for running a single search process of an application 2 may be 2U4G. Based on this, for each type of application, a correspondence associated with the type of application may be configured in the resource scheduling apparatus, and node performance in the correspondence may be obtained by testing the type of application.

For example, a correspondence that is associated with an application of a specific type and that is configured in the resource scheduling apparatus may be shown in Table 1. As shown in Table 1, a node whose node specification is 2U8G can carry one shard, and a maximum data write rate supported by the node is 4 Mbps. A node whose node specification is 8U32G also can carry one shard, but a maximum data write rate supported by the node can reach 16 Mbps.

**Table 1**

| Node specification | Quantity of carried shards | Maximum data write rate (Mbps) |
| --- | --- | --- |
| 2U8G | 1 | 4 |
| 4U16G | 1 | 8 |
| 8U32G | 1 | 16 |
| 12U48G | 1 | 24 |
| 16U64G | 2 | 32 |
| 24U96G | 2 | 48 |
| 32U128G | 2 | 64 |

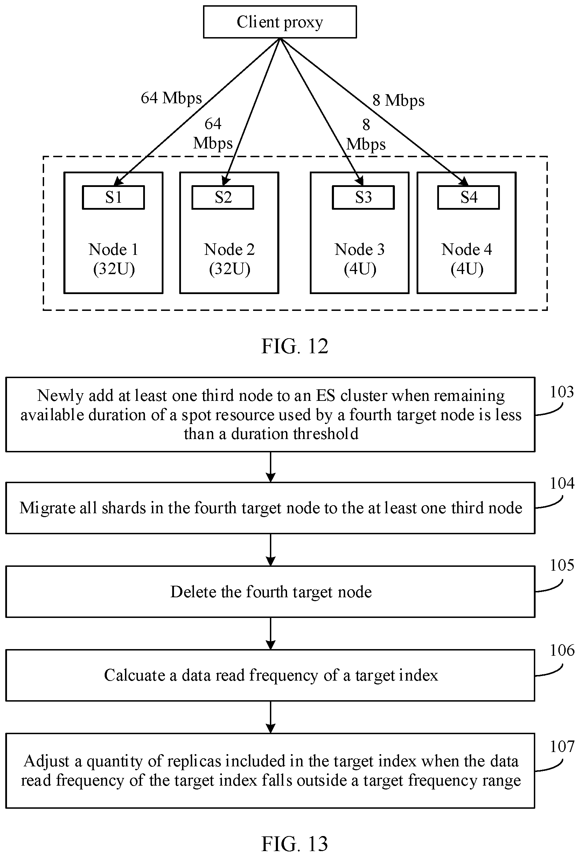

As shown in FIG. 12, it is assumed that the resource scheduling apparatus adjusts node specifications of the node 1 and the node 2 in the ES cluster to 32U, newly adds the node 3 and the node 4 whose node specifications are 4U to the ES cluster, migrates the shard S3 to the node 3, and migrates the shard S4 to the node 4. With reference to Table 1, it can be learned that maximum data write rates supported by the node 1 and the node 2 each are 64 Mbps, and maximum data write rates supported by the node 3 and the node 4 each are 8 Mbps. A total data write rate supported by the four nodes may reach 144 Mbps.

Optionally, a resource used by a fourth target node in the plurality of first nodes may be a spot resource. The spot resource is a resource whose costs (price) are low and changes with a supply-demand relationship.

In a first possible example, the resource scheduling apparatus may purchase a spot resource of fixed duration in a specific time period (for example, at night), to use the spot resource as the resource of the fourth target node. When running duration of the spot resource reaches the fixed duration, the spot resource will be automatically released, that is, the spot resource will be reclaimed by the resource pool.

In a second possible example, the resource scheduling apparatus may purchase the spot resource based on a preset target price, and use the spot resource as the resource of the fourth target node. If the target price is higher than a market price of the spot resource and the resource pool has enough resources, the ES cluster can continuously occupy the spot resource. If the target price is lower than the market price of the spot resource, or there is no resource inventory in the resource pool, the resource pool sends a pre-warning notification to the resource scheduling apparatus, and automatically releases (reclaims) the spot resource after specific duration.

FIG. 13 is another flowchart of the resource scheduling method according to this embodiment of this application. As shown in FIG. 13, the resource scheduling method may further include the following steps.

Step 103: Newly add at least one third node to the ES cluster when remaining available duration of the spot resource used by the fourth target node is less than a duration threshold.

When the remaining available duration of the spot resource is less than the duration threshold, the resource scheduling apparatus may newly add the at least one third node to the ES cluster (for example, a writer cluster), so that a shard in the fourth target node is migrated to the at least one third node. The duration threshold may be greater than duration required for migrating the shard in the fourth target node. In this way, it can be ensured that migration of the shard in the fourth target node can be completed before the spot resource used by the fourth target node is released, to avoid impact on a service.

Optionally, a resource used by the at least one third node newly added by the resource scheduling apparatus may include an on-demand resource and/or a spot resource. For example, the resource scheduling apparatus may select, according to the cost-first policy, an on-demand resource and/or a spot resource from a resource pool as the resource used by the at least one third node. The on-demand resource is a resource purchased based on a service requirement, and costs of the on-demand resource are higher than costs of the spot resource.

In a first example, if the resource scheduling apparatus purchases the spot resource based on the fixed duration, the resource scheduling apparatus may monitor in real time the remaining available duration of the spot resource used by the fourth target node. The remaining available duration may be equal to a difference between the fixed duration and used duration of the spot resource. When the remaining available duration is less than the duration threshold preconfigured in the resource scheduling apparatus, the resource scheduling apparatus may newly add the at least one third node to the ES cluster.

For example, if the fixed duration of the spot resource purchased by the resource scheduling apparatus for the fourth target node is two hours, and the duration threshold is 20 minutes, the resource scheduling apparatus may newly add the at least one third node to the ES cluster when the used duration of the spot resource reaches one hour and 40 minutes. If the target index is used to store live streaming log data, because the live streaming log data is generally packaged at a granularity of five minutes, uploaded to the ES cluster, and indexed, a migration process of the shard is started when the remaining available duration of the spot resource is 20 minutes, and abundant migration time is reserved for the shard. This can avoid impact on service performance.

If the resource scheduling apparatus purchases the spot resource based on a target price, when receiving a pre-warning notification sent by the resource pool, the resource scheduling apparatus may determine that the remaining available duration of the spot resource is less than the duration threshold, and newly add the at least one third node to the ES cluster. The duration threshold may be reserved duration from a time point at which the resource pool sends the pre-warning notification to a time point at which the spot resource is automatically released.

It may be understood that, when newly adding the at least one third node to the ES cluster, the resource scheduling apparatus may determine, based on a data write rate of the target index, a quantity of at least one to-be-newly-added third node and a specification of each third node. For example, a total quantity of processor cores included in the at least one third node and a first node, other than the fourth target node, in the ES cluster may satisfy Formula (5).

Step 104: Migrate each shard in the fourth target node to the at least one third node.

In this embodiment of this application, after newly adding the at least one third node, the resource scheduling apparatus may migrate each shard in the fourth target node to the at least one third node. For example, the resource scheduling apparatus may migrate a shard to the at least one third node according to the load balancing policy. For an implementation process of step 104, refer to that of step 102a2 and step 102b2. Details are not described herein again.

Step 105: Delete the fourth target node.

When shard migration is completed, and the remaining available duration of the spot resource used by the fourth target node is zero, the resource scheduling apparatus may delete the fourth target node, to release the spot resource used by the fourth target node. For an implementation process of step 105, refer to that of step 102b3. Details are not described herein again.

The following describes an implementation process of step 103 to step 105 by using an example in which the resource scheduling apparatus is the application hosting component shown in FIG. 2.

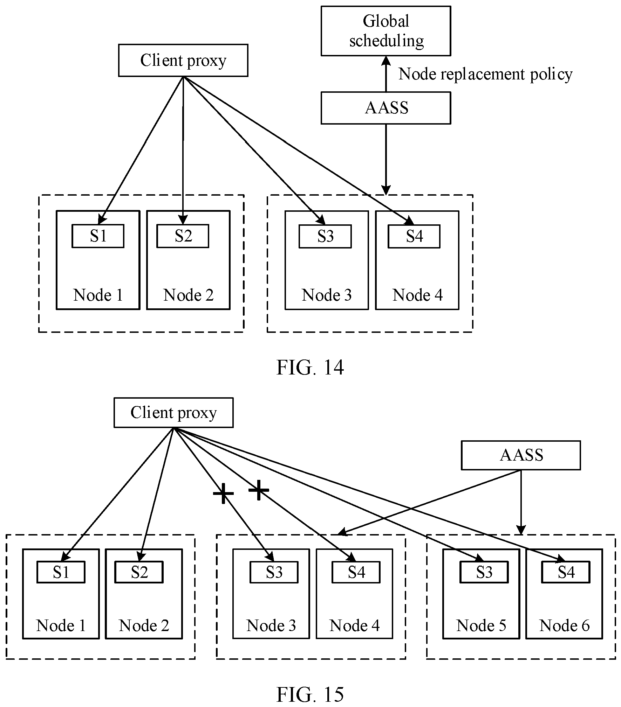

As shown in FIG. 14, when detecting that the remaining available duration of the spot resource used by the fourth target node (for example, a node 3 or a node 4 in FIG. 14) is less than the duration threshold, the AASS component may determine a node replacement policy, where the node replacement policy includes the quantity of at least one to-be-newly-added third node and the node specification of each to-be-newly-added third node. For example, the AASS component may report node requirement information to the global scheduling component, and the global scheduling component may determine the node replacement policy based on the node requirement information and the plurality of candidate node specifications, and deliver the node replacement policy to the AASS component. The node requirement information may indicate a total quantity of to-be-newly-added processor cores.

Then, according to the node replacement policy, the AASS component can newly add the at least one third node to the ES cluster and adjust a deployment policy of a shard. For example, as shown in FIG. 15, the AASS component may newly add two third nodes in total: a node 5 and a node 6. In addition, the AASS component may adjust the deployment policy of a shard as follows: The shard S3 is deployed in the node 5, and the shard S4 is deployed in the node 6.

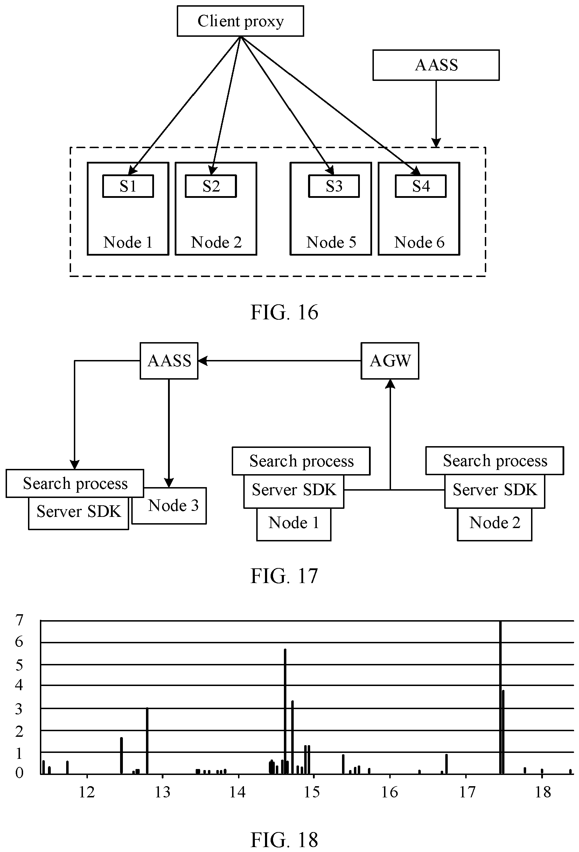

Further, the client proxy component may migrate at least one shard to the at least one newly added third node according to an adjusted shard deployment policy. For example, as shown in FIG. 15, the client proxy component may migrate the shard S3 in the node 3 to the node 5, and migrate the shard S4 in the node 4 to the node 6. When the remaining available duration of the spot resource used by the node 3 or the node 4 is zero, as shown in FIG. 16, the AASS component may delete the node 3 or the node 4.

It can be learned from the foregoing analysis that, in the method provided in this embodiment of this application, a quantity of resources occupied by a plurality of shards of the target index may be adjusted, to implement flexible adjustment of data write performance of the target index, that is, write elasticity of the ES cluster can be implemented. Based on this, the solution provided in this embodiment of this application may be applied to a scenario in which a large amount of written data is stored and the amount of written data fluctuates greatly with time. For example, the target index may be used to store media log data or transaction data of a transaction system. The media log data may include live streaming log data, on-demand log data, and the like.

The foregoing is described by using an example in which the resource scheduling apparatus adjusts, based on the data write rate of the target index, a quantity of resources occupied by a plurality of shards of the target index. In this embodiment of this application, the ES cluster may alternatively include the plurality of fourth nodes, the target index may further include a plurality of replicas, and the plurality of replicas are carried by the plurality of fourth nodes. The plurality of fourth nodes may form a reader cluster of the target index. For example, the plurality of fourth nodes may be a node $N_{rl}$ to a

node $N_{rN}$ in FIG. 2. The resource scheduling apparatus may further flexibly adjust, based on a data read frequency of the target index, a quantity of replicas included in the target index, to implement read elasticity of the ES cluster. Still as shown in FIG. 13, the resource scheduling method provided in this embodiment of this application may further include the following steps.

Step 106: Calculate the data read frequency of the target index.

In this embodiment of this application, the resource scheduling apparatus may calculate the data read frequency of the target index in real time or periodically. The data read frequency may be a quantity of data read requests that are for the target index and that are received in unit time. Optionally, a data read frequency calculated by the resource scheduling apparatus at each statistical moment may be a ratio of a quantity of data read requests received in second target duration ending before the statistical moment to the second target duration. For example, if a statistical unit of the second target duration is second, the data read frequency may be queries per second (queries per second, QPS).

The second target duration may be equal to or different from the first target duration for collecting the data write rate. For example, the second target duration and the first target duration each may be 5 minutes.

Step 107: Adjust the quantity of replicas included in the target index when the data read frequency of the target index falls outside a target frequency range.

Each replica in the target index is obtained by replicating a shard of the target index, that is, data stored in each replica is the same as data stored in a shard corresponding to the replica. In addition, quantities of replicas of different shards of the target index may be the same or may be different.

It may be understood that a replica of the target index may provide a data query service, and a larger quantity of replicas included in the target index indicates a higher maximum data read frequency supported by the target index. In this embodiment of this application, the resource scheduling apparatus pre-stores the target frequency range, and the target frequency range may be determined based on a quantity of replicas currently included in the target index.

It may be further understood that, when a document (the document is a minimum unit for data storage) is stored in the target index, an identity of a target shard used to store the document needs to be calculated based on the quantity of shards included in the target index. For example, the identity shard _num of the target shard may be calculated according to the following formula:

$$shard\_num = hash \ (routing) \ \%num\_primary\_shards \quad Formula \ (6)$$

Herein, hash indicates a hash operation, routing is a preset routing key, and num_primary_shards is the quantity of shards included in the target index. When the document is read from the target index, the identity of the target shard in which the document is stored also needs to be determined according to Formula (6). It can be learned from the foregoing analysis that, to ensure accurate data query, after the target index is created, the quantity of shards included in the target index cannot be modified.

Because the quantity of shards included in the target index cannot be adjusted, and the quantity of replicas may be flexibly adjusted, the larger quantity of replicas included in the target index indicates the higher maximum data read frequency that can be supported by the target index, that is, better data read performance of the plurality of fourth nodes. In addition, because a quantity of replicas that can be carried by each fourth node in the ES cluster is positively correlated with a node specification of the fourth node, in this embodiment of this application, the target frequency range may be determined based on node specifications of the plurality of fourth nodes in the ES cluster.

An intersection set may exist between the plurality of fourth nodes and the plurality of first nodes described above, or the plurality of fourth nodes may be independent of the plurality of first nodes. For example, as shown in FIG. 2, if the ES cluster is deployed in a read/write splitting manner, the plurality of first nodes may be nodes in the writer cluster, and the plurality of fourth nodes may be nodes in the reader cluster.

Optionally, the resource scheduling apparatus may obtain a preset data read frequency threshold r0 of each processor core, namely, a single-core data read frequency. Then, the target frequency range may be determined based on a product of the data read frequency threshold r0 and a total quantity m4 of processor cores included in the plurality of fourth nodes. For example, the target frequency range may be (r0 $\times$ m4) $\pm$ $\Delta$r. Herein, $\Delta$r is a preset read rate fluctuation value, and may be a number greater than or equal to 0.

For example, it is assumed the data read frequency threshold r0 of each processor core is 5 QPS, and the ES cluster includes ten fourth nodes of 4U16G. In this way, a total quantity m4 of processor cores included in the ten fourth nodes is 40. Correspondingly, the resource scheduling apparatus may determine that the target frequency range is (200 $\pm$$\Delta$r) QPS. If the preset read rate fluctuation value $\Delta$r is 0, the target frequency range may be equal to 200 QPS.

When the data read frequency of the target index falls outside the target frequency range, the resource scheduling apparatus may determine that data read performance of the plurality of fourth nodes does not match the data read frequency of the target index. If the data read frequency of the target index is greater than an upper limit of the target frequency range, the resource scheduling apparatus may determine that the data read performance of the plurality of fourth nodes cannot support the data read frequency. If the data read frequency of the target index is less than a lower limit of the target frequency range, the resource scheduling apparatus may determine that the data read performance of the plurality of fourth nodes is not fully used, that is, resource utilization of the ES cluster is low.

Based on this, the resource scheduling apparatus may adjust the quantity of replicas included in the target index, so that the quantity of replicas included in the target index can match the data read frequency. In this way, the resource utilization of the ES cluster can be effectively improved while the data read performance is ensured.

In this embodiment of this application, if the data read frequency of the target index is greater than the upper limit of the target frequency range, the resource scheduling apparatus may newly add at least one fifth node to the ES cluster, and may newly add at least one replica of the target index to each fifth node. A quantity of replicas newly added to each fifth node may be positively correlated with a node specification of the fifth node. In other words, a higher node specification of the fifth node indicates a larger quantity of replicas newly added to the fifth node.

In a first possible example, a node specification of the at least one fifth node is a preset specification. Correspondingly, a quantity of the at least one fifth node may be determined based on a difference between the data read frequency and the upper limit of the target frequency range, and the quantity of the at least one fifth node is positively correlated with the difference.

In the first example, if a quantity of processor cores in the preset specification is m0, a quantity n3 of the at least one to-be-newly-added fifth node may satisfy:

$$n3 \geq (r1 - r2)/(r0 \times m0) \ \ \text{Formula (7)}$$

Herein, r1 is the data read frequency of the target index, r2 is the upper limit of the target frequency range, and r0 is the data read frequency threshold of each processor core. Formula (7) may also be transformed to $(n3 \times m0) \geq (r1 - r2)/r0$, where $(n3 \times m0)$ is a total quantity of processor cores included in the at least one newly added fifth node.

It is assumed that the data read frequency threshold r0 of each processor core is 5 QPS, the upper limit r2 of the target frequency range is 200 QPS, and a node specification of each available node in the resource pool is 4U16G. In this way, m0=4. As shown in FIG. 17, if the AASS component detects, by using an AGW, that the data read frequency r1 of the target index is 210 QPS, the AASS component may determine, according to Formula (7), a to-be-newly-added fifth node whose node specification is 4U16G. Correspondingly, as shown in FIG. 17, the AASS component may newly add the node 3 to the ES cluster, and newly add a replica to the node 3. The replica is hosted by a search process, and the search process is integrated with a server SDK.

In a second possible example, available nodes in the resource pool have a plurality of different candidate node specifications. The resource scheduling apparatus may determine a quantity of the at least one to-be-newly-added fifth node and a node specification of each fifth node based on the plurality of different candidate node specifications and a difference between the data read frequency and the upper limit of the target frequency range. The node specification of each fifth node is selected from the plurality of candidate node specifications, and node specifications of different fifth nodes may be the same or may be different.

In the second example, a total quantity m5 of processor cores included in the at least one fifth node may satisfy:

$$m5 \geq (r1 - r2)/r0 \ \ \text{Formula (8)}$$

Optionally, the resource scheduling apparatus may determine the quantity of the at least one fifth node and the node specification of each fifth node based on costs of a specification of each candidate node and according to a cost-first policy. In this way, costs of a newly added node can be reduced while it is ensured that data read performance of the ES cluster is effectively improved.

In this embodiment of this application, if the data read frequency of the target index is less than the lower limit of the target frequency range, the resource scheduling apparatus may determine the at least one fifth target node from the plurality of fourth nodes, and may delete a replica distributed in each fifth target node. Then, the resource scheduling apparatus may delete the at least one fifth target node.

The at least one fifth target node may satisfy at least one of the following conditions: A quantity of replicas distributed in the node is less than a sixth threshold; and a data read frequency of the node is less than a seventh threshold. In other words, the resource scheduling apparatus may delete a fourth node with a small quantity of shards, and/or delete a fourth node with a small quantity of received data read requests. The sixth threshold and the seventh threshold may be fixed values preconfigured in the resource scheduling apparatus. Alternatively, the sixth threshold may be determined based on quantities of replicas in all fourth nodes, for example, may be an average value or a lower quartile of the quantities of replicas in all the fourth nodes. The seventh threshold may be determined based on data read frequencies of all the fourth nodes, for example, may be an average value or a lower quartile of the data read frequencies of all the fourth nodes.

FIG. 18 is a diagram of a data read frequency of a target index according to an embodiment of this application. In FIG. 18, an example in which the target index is used to store media log data is used for illustration. In FIG. 18, a horizontal axis is time, and a unit is hour; and a vertical axis is a data read frequency, and a unit is times/minute. As shown in FIG. 18, it can be learned that the overall data read frequency of the target index is low, and a peak value is about 7 times/minute. If a data read frequency supported by a fourth node in an ES cluster is 20 QPS, good data read performance can be ensured.

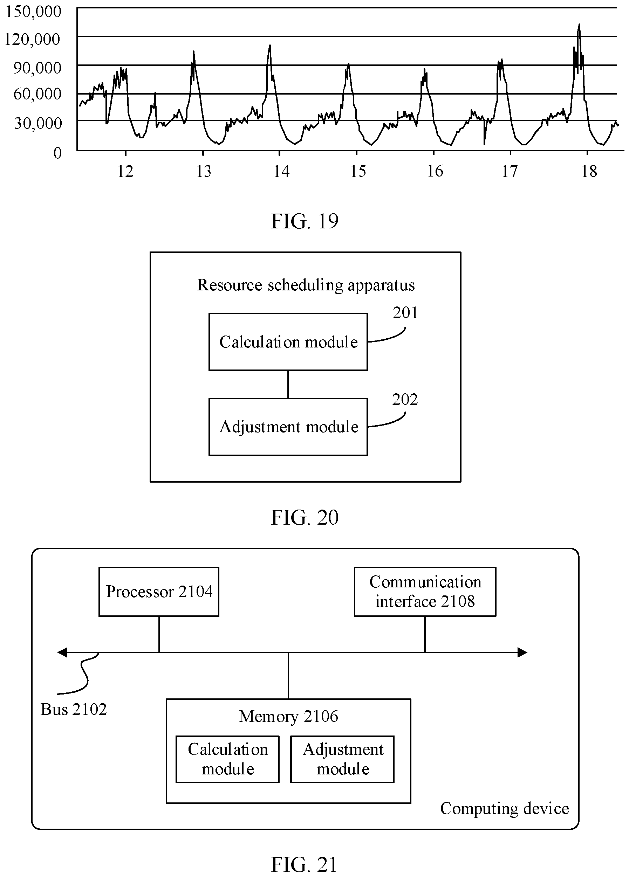

FIG. 19 is a diagram of a data write frequency of a target index according to an embodiment of this application. In FIG. 19, an example in which the target index is used to store media log data is used for illustration. In FIG. 19, a horizontal axis is time, and a unit is hour; and a vertical axis is a data write frequency, and a unit is times/minute. As shown in FIG. 19, it can be learned that a peak value range of the data write frequency of the target index is about 5,600 times/minute to 137,000 times/minute. Because the data write frequency of the target index is high, a data write rate of the target index is also high. In addition, it can be further learned from FIG. 19 that the data write rate of the target index fluctuates greatly with time. According to the solution provided in embodiments of this application, a quantity of resources occupied by the target index can be dynamically adjusted based on the data write rate of the target index. Therefore, dynamic elasticity of data write performance can be implemented, and resource utilization of the ES cluster is effectively improved while data write performance is ensured.

It may be understood that a sequence of steps of the resource scheduling method for the ES cluster provided in embodiments of this application may be properly adjusted, or steps may be correspondingly added or deleted based on a situation. For example, step 103 to step 105 may be deleted based on a situation; or step 106 and step 107 may be deleted based on a situation; or step 106 and step 107 may be performed before step 105; or step 103 to step 105 may be performed before step 102.

In conclusion, an embodiment of this application provides a resource scheduling method for an ES cluster. According to the method, a data write rate of a target index can be calculated, and when the data write rate falls outside a target rate range, a quantity of resources of nodes occupied by a plurality of shards of the target index can be dynamically adjusted. Because both a data storage capacity of the target index and a maximum data write rate supported by the target index are related to the quantity of resources occupied by the plurality of shards, in the method provided in this embodiment of this application, the data storage capacity and the maximum data write rate of the target index can be dynamically adjusted without changing a quantity of shards included in the target index. In this way, flexibility of data writing is effectively improved, and utilization of cluster resources is effectively improved.

In addition, according to the method provided in this embodiment of this application, a quantity of replicas included in the target index may be further flexibly adjusted based on a data read frequency of the target index. In this way, read elasticity of the ES cluster is implemented. In addition, when a node is newly added to the ES cluster, a node specification of the newly added node and a type of a resource used by the node may be flexibly selected. Therefore, flexibility of newly adding the node is effectively improved, and costs of the newly added node can be reduced. For example, through testing, in a scenario in which log data is stored in the target index, elasticity of a writer cluster is implemented, so that costs of the ES cluster can be reduced by 50%. If the resource scheduling apparatus can further flexibly select, based on a cost-first principle, a node specification of a node and a type of a resource used by the node, the costs of the ES cluster can be reduced by 70%.

An embodiment of this application provides a resource scheduling apparatus for an ES cluster. The resource scheduling apparatus may be configured to implement the resource scheduling method for the ES cluster provided in the foregoing method embodiment. The ES cluster includes a plurality of first nodes configured to carry a target index, and the target index includes a plurality of shards. The resource scheduling apparatus may be deployed on a cloud platform. For example, the resource scheduling apparatus may be the application hosting component shown in FIG. 2. As shown in FIG. 20, the resource scheduling apparatus includes:

  a statistics module 201, configured to calculate a data write rate of a target index, where a function implementation of the statistics module 201 may refer to related description of step 101; and
  an adjustment module 202, configured to adjust, when the data write rate of the target index falls outside a target rate range, a quantity of resources of nodes occupied by a plurality of shards, where a function implementation of the adjustment module 202 may refer to related description of step 102.

Optionally, the adjustment module 202 may be configured to: newly add at least one second node to an ES cluster when the data write rate of the target index is greater than an upper limit of the target rate range; and migrate at least shard in the plurality of shards to the at least one second node. A function implementation of the adjustment module 202 may further refer to related description of step 102a1 and step 102a2.

In an optional implementation, the adjustment module 202 may be further configured to: before the at least one second node is newly added to the ES cluster, determine a quantity of the at least one to-be-newly-added second node based on a difference between the data write rate of the target index and the upper limit of the target rate range. The quantity is positively correlated with the difference, and a node specification of the at least one second node is a preset specification.

In another optional implementation, the adjustment module 202 may be further configured to: before the at least one second node is newly added to the ES cluster, determine a quantity of the at least one to-be-newly-added second node and a node specification of each second node based on a plurality of different candidate node specifications and a difference between the data write rate of the target index and the upper limit of the target rate range. The node specification of each second node is selected from the plurality of candidate node specifications.

Optionally, a total quantity m1 of processor cores included in the at least one second node satisfies: $m1 \geq (s1 - s2)/s0$. Herein, s1 is the data write rate of the target index, s2 is the upper limit of the target rate range, and s0 is a data write rate threshold of each processor core.

Optionally, a resource used by the at least one second node is a spot resource.

Optionally, the at least one shard satisfies at least one of the following conditions: An amount of data written into the shard is less than a first threshold; and a total quantity of shards distributed in a first node in which the shard is located is greater than a second threshold.

Optionally, the adjustment module 202 may be configured to: determine at least one to-be-deleted first target node from a plurality of first nodes when the data write rate of the target index is less than a lower limit of the target rate range; migrate all shards distributed in the at least one first target node to a first node other than the at least one first target node; and delete the at least one first target node. A function implementation of the adjustment module 202 may further refer to related description of step 102b1 to step 102b3.

Optionally, the at least one first target node satisfies that a total quantity of shards distributed in a node is less than a third threshold.

Optionally, the adjustment module 202 may be configured to: adjust a node specification of at least one first node in the plurality of first nodes when the data write rate of the target index falls outside the target rate range.

Optionally, the adjustment module 202 may be configured to: increase a node specification of at least one second target node in the plurality of first nodes when the data write rate of the target index is greater than the upper limit of the target rate range; or reduce a node specification of at least one third target node in the plurality of first nodes when the data write rate of the target index is less than the lower limit of the target rate range.

Optionally, a resource used by a fourth target node in the plurality of first nodes is a spot resource; and the adjustment module 202 may be further configured to: newly add at least one third node to the ES cluster when remaining available duration of the spot resource used by the fourth target node is less than a duration threshold; migrate all shards distributed in the fourth target node to the at least one third node; and delete the fourth target node. A function implementation of the adjustment module 202 may further refer to related description of step 103 to step 105.

Optionally, a resource used by the at least one third node includes an on-demand resource and/or a spot resource.

Optionally, the ES cluster may further include a plurality of fourth nodes, and the plurality of fourth nodes are configured to carry a plurality of replicas of the target index. The statistics module 201 may be further configured to calculate a data read frequency of the target index. A function implementation of the statistics module 201 may further refer to related description of step 106.

The adjustment module 202 may be further configured to adjust a quantity of replicas included in the target index when the data read frequency of the target index falls outside a target frequency range. A function implementation of the adjustment module 202 may further refer to related description of step 107.

Optionally, the adjustment module 202 may be configured to: newly add at least one fifth node to the ES cluster when the data read frequency of the target index is greater than an upper limit of the target frequency range; and newly add at least one replica of the target index to each fifth node.

Optionally, the adjustment module 202 may be configured to: delete a replica distributed in at least one fifth target node in the plurality of fourth nodes when the data read frequency of the target index is less than a lower limit of the target frequency range; and delete the at least one fifth target node.

It may be understood that, if the resource scheduling apparatus is the application hosting component shown in FIG. 2, a function of the statistics module 201 may be implemented by a server SDK, an AGW, and an AASS component, and a function of the adjustment module 202 may be implemented by an AASS component, a client proxy component, and a global scheduling component.

In conclusion, an embodiment of this application provides a resource scheduling apparatus for an ES cluster. The apparatus can calculate a data write rate of a target index, and can dynamically adjust, when the data write rate falls outside a target rate range, a quantity of resources of nodes occupied by a plurality of shards of the target index. Because both a data storage capacity of the target index and a maximum data write rate supported by the target index are related to the quantity of resources occupied by the plurality of shards, the apparatus provided in this embodiment of this application can dynamically adjust the data storage capacity and the maximum data write rate of the target index without changing a quantity of shards included in the target index. In this way, flexibility of data writing is effectively improved, and utilization of cluster resources is effectively improved.

Persons skilled in the art may clearly understand that, for simple and clear description, for specific work processes of the foregoing described resource scheduling apparatus and the modules, reference may be made to corresponding processes in the foregoing method embodiment, and details are not described herein again.

It may be understood that all modules (for example, the statistics module 201 and the adjustment module 202) in the resource scheduling apparatus may be implemented by using software, or may be implemented by using hardware. For example, the following uses the statistics module 201 as an example to describe an implementation of the statistics module 201. Similarly, for an implementation of the adjustment module 202, refer to an implementation of the statistics module 201.

The module is as an example of a software functional unit, and the statistics module 201 may include code run on a computing instance. The computing instance may include at least one of a physical host (computing device), a virtual machine, and a container. Further, there may be one or more computing instances. For example, the statistics module 201 may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the statistics module 201 may include at least one computing device like a server. Alternatively, the statistics module 201 may be a device implemented by using an application-specific integrated circuit (application-specific integrated circuit, ASIC) or a programmable logic device (programmable logic device, PLD), or the like. The PLD may be a complex programmable logic device (complex programmable logic device, CPLD), a field-programmable gate array (field-programmable gate array, FPGA), a generic array logic (generic array logic, GAL), or any combination thereof.

The plurality of computing devices included in the statistics module 201 may be distributed in a same region, or may be distributed in different regions. The plurality of computing devices included in the statistics module 201 may be distributed in a same AZ, or may be distributed in different AZs. Similarly, the plurality of computing devices included in the statistics module 201 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in another embodiment, the statistics module 201 may be configured to perform any step in the foregoing resource scheduling method, and the adjustment module 202 may also be configured to perform any step in the foregoing resource scheduling method. Steps whose implementations are responsible by the statistics module 201 and the adjustment module 202 may be specified as required. The statistics module 201 and the adjustment module 202 are respectively configured to implement different steps in the resource scheduling method to implement all functions of the resource scheduling apparatus.

FIG. 21 is a diagram of a structure of a computing device according to an embodiment of this application. As shown in FIG. 21, the computing device may include a bus 2102, a processor 2104, a memory 2106, and a communication interface 2108. The processor 2104, the memory 2106, and the communication interface 2108 communicate with each other via the bus 2102. The computing device may be a server or a terminal device. It should be understood that quantities of processors and memories of the computing device are not limited in embodiments of this application.

The bus 2102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 21, but this does not mean that there is only one bus or only one type of bus. The bus 2102 may include a path for transferring information between various components (for example, the memory 2106, the processor 2104, and the communication interface 2108) of the computing device.

The processor 2104 may include any one or more of processors such as a central processing unit (central processing unit, CPU), a graphics processing unit (graphics processing unit, GPU), a micro processor (micro processor, MP), or a digital signal processor (digital signal processor, DSP).

The memory 2106 may include a volatile memory (volatile memory), for example, a random access memory (random access memory, RAM). The processor 2104 may further include a nonvolatile memory (nonvolatile memory), for example, a read-only memory (read-only memory, ROM), a flash memory, a hard disk drive (hard disk drive, HDD), or a solid state drive (solid state drive, SSD).

The memory 2106 stores executable program code, and the processor 2104 executes the executable program code to separately implement functions of the statistics module and the adjustment module, so as to implement the resource scheduling method provided in the foregoing method embodiment. In other words, instructions used to perform the resource scheduling method are stored in the memory 2106.

The communication interface 2108 uses a transceiver module, for example, but not limited to, a network interface card or a transceiver, to implement communication between the computing device and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

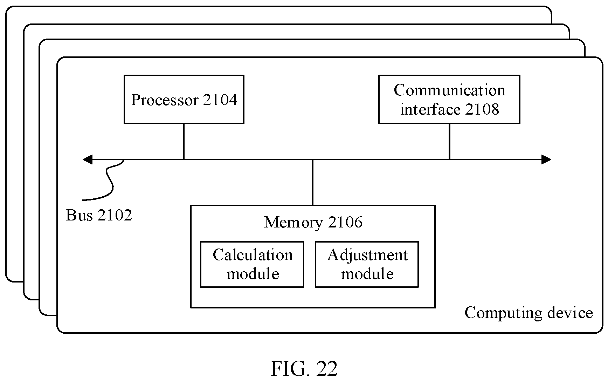

As shown in FIG. 22, the computing device cluster includes the at least one computing device. The memory 2106 of one or more computing devices in the computing device cluster may store same instructions used to perform the resource scheduling method.

In some possible implementations, the memory 2106 of the one or more computing devices in the computing device cluster may also separately store some instructions used to perform the resource scheduling method. In other words, a combination of the one or more computing devices may jointly execute instructions used to perform the resource scheduling method.

It should be noted that memories 2106 of different computing devices in the computing device cluster may store different instructions respectively used to perform some functions of the resource scheduling apparatus. In other words, the instructions stored in the memories 2106 of different computing devices may implement functions of one or more of the statistics collection module and the adjustment module.

In some possible implementations, the one or more computing devices in the computing device cluster may be connected through a network. The network may be a wide area network, a local area network, or the like.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the resource scheduling method for an ES cluster provided in the foregoing method embodiment.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the resource scheduling method for an ES cluster provided in the foregoing method embodiment.

An embodiment of this application further provides an elastic-search system. The elastic-search system can provide a cloud search service (cloud search service, CSS). The elastic-search system may include the ES cluster shown in FIG. 1 and a resource scheduling apparatus configured to schedule a resource of the ES cluster.

The ES cluster may include a plurality of nodes. The plurality of nodes may be deployed in a read/write splitting manner, and may be deployed in a storage-compute decoupling manner.

The resource scheduling apparatus may be configured to implement the resource scheduling method for an ES cluster provided in the foregoing method embodiment. For example, the resource scheduling apparatus may be the application hosting component shown in FIG. 2, and a structure of the resource scheduling apparatus may refer to any one of FIG. 20 to FIG. 22.

In embodiments of this application, the terms "first", "second", and "third" are merely used for description, but cannot be understood as an indication or implication of relative importance. The term "and/or" in this application describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

**Claims**

1. A resource scheduling method for elastic-search, applied in an elastic-search system, the elastic-search system comprises a client proxy, a writer cluster and a reader cluster; the writer cluster includes a plurality of first nodes, the plurality of first nodes are used to write data to an index of the elastic-search, one or more shards of the index are distributed in each of the first nodes; the reader cluster includes a plurality of second nodes, the plurality of second nodes are used to read data from the index of the elastic-search, one or more replicas of the index are distributed in each of the second nodes, the one or more replicas of the index are replicas of the one or more shards of the index; wherein the method comprises:

the client proxy receives data write requests and data read requests, wherein each of the data write request is used to request to write data into the index, and each of the data read requests is used to request to read data in the index;
the client proxy distributes the data write requests to the writer cluster, the first nodes of the writer cluster processes the data write requests by writing data into the one or more shards of the index, wherein a quantity of resources occupied by the one or more shards of the index are adjusted according to load of the data write requests; and
the client proxy distributes the data read requests to the reader cluster, the second nodes of the reader cluster processes the data read requests by reading data from the one or more replicas of the index.

2. The method according to claim 1, wherein a quantity of resources occupied by the one or more replicas of the index are adjusted according to load of the data read requests.

3. The method according to claim 1 or 2, wherein a quantity of resources occupied by the one or more shards of the index are adjusted according to load of the data write requests, comprises:
quantities of the first nodes or a node specification of one or more first nodes in the writer cluster, are adjusted according to the load of the data write requests, wherein the node specification of the first node comprises a quantity of processor cores included in the first node and/or a memory size of the first node.

4. The method according to claim 2, wherein a quantity of resources occupied by the one or more replicas of the index are adjusted according to load of the data read requests, comprises:
quantities of the second nodes or a node specification of one or more second nodes in the reader cluster, are adjusted according to load of the data read requests, wherein the node specification of the second node comprises a quantity of processor cores included in the second node and/or a memory size of the second node.

5. The method according to any one of claims 1 to 4, wherein the method comprises:

when load of the data write requests is greater than a first upper threshold of load, adding one or more new first nodes to the writer cluster, and/or, adding one or more new shards of the index in the writer cluster; or,
when load of the data write requests is less than a first lower threshold of load, deleting one or more first nodes in the writer cluster.

6. The method according to any one of claims 1 to 5, wherein the method comprises:

after the one or more new first nodes are added to the writer cluster, migrating one or more shards of the index from one or more old first nodes to the one or more new first nodes in the writer cluster; or,
before the one or more first nodes are deleted in the writer cluster, migrating one or more shards of the index from one or more to-be-deleted first nodes to other first nodes in the writer cluster.

7. The method according to claim 6, wherein a policy of migrating a shard in the writer cluster is a load balancing policy.

8. The method according to claim 6 or 7, wherein the step of migrating one or more shards of the index from one or more old first nodes to the one or more new first nodes in the writer cluster, comprises:
migrating a target shard of the index from the old first node to the new first node, wherein the target shard satisfes at least one of the following conditions:

an amount of data written into the target shard is less than a first threshold; and
a total quantity of shards distributed in an old first node in which the target shard is located is greater than a second threshold.

9. The method according to any one of claims 1 to 8, wherein the method comprises:

when load of the data read requests is greater than a second upper threshold of load, adding one or more new second nodes to the reader cluster, and/or, adding one or more new replicas of the index in the reader cluster; or, when load of the data read requests is less than a second lower threshold of load, deleting one or more second nodes in the reader cluster.

10. The method according to any one of claims 1 to 9, wherein the method comprises:

after the one or more new second nodes are added to the reader cluster, migrating one or more replicas of the index from one or more old second nodes to the one or more new second nodes in the reader cluster; or, before the one or more second nodes are deleted in the reader cluster, migrating one or more replicas of the index from one or more to-be-deleted second nodes to other second nodes in the reader cluster.

11. The method according to claim 10, wherein a policy of migrating a shard in the reader cluster is a load balancing policy.

12. The method according to claim 10 or 11, wherein the step of migrating one or more replicas of the index from one or more old second nodes to the one or more new second nodes in the reader cluster, comprises: migrating a target replica of the index from the old second node to the new second node, wherein the target replica satisfes at least one of the following conditions:

an amount of data written into the target replica is less than a third threshold; and a total quantity of shards distributed in an old second node in which the target replica is located is greater than a fourth threshold.

13. The method according to any one of claims 1 to 12, wherein the load of the data write requests comprises a data write rate of the index; and/or, the load of the data read requests comprises a data read frequency of the index.

14. An elastic-search system, wherein the elastic-search system comprises a client proxy, a writer cluster and a reader cluster;

the writer cluster includes a plurality of first nodes, the plurality of first nodes are used to write data to an index of the elastic-search, and one or more shards of the index are distributed in each of the first nodes; the reader cluster includes a plurality of second nodes, the plurality of second nodes are used to read data from the index of the elastic-search, one or more replicas of the index are distributed in each of the second nodes, and the one or more replicas of the index are replicas of the one or more shards of the index; the client proxy is configured to receive data write requests and data read requests, distribute the data write requests to the writer cluster, and distribute the data read requests to the reader cluster, wherein each of the data write request is used to request to write data into the index, and each of the data read requests is used to request to read data in the index; the first nodes of the writer cluster are configured to process the data write requests by writing data into the one or more shards of the index, wherein a quantity of resources occupied by the one or more shards of the index are adjusted according to load of the data write requests; the second nodes of the reader cluster are configured to process the data read requests by reading data from the one or more replicas of the index.

15. The elastic-search system according to claim 14, wherein a quantity of resources occupied by the one or more replicas of the index are adjusted according to load of the data read requests.

16. The elastic-search system according to claim 14 or 15, wherein a quantity of resources occupied by the one or more shards of the index are adjusted according to load of the data write requests, comprises: quantities of the first nodes or a node specification of one or more first nodes in the writer cluster, are adjusted according to the load of the data write requests, wherein the node specification of the first node comprises a quantity of processor cores included in the first node and/or a memory size of the first node.

17. The elastic-search system according to claim 15, wherein a quantity of resources occupied by the one or more replicas of the index are adjusted according to load of the data read requests, comprises: quantities of the second nodes or a node specification of one or more second nodes in the reader cluster, are adjusted according to load of the data read requests, wherein the node specification of the second node comprises a quantity of processor cores included in the second node and/or a memory size of the second node.

**18.** The elastic-search system according to any one of claims 14 to 17, wherein the elastic-search system comprises a resource scheduling apparatus, and the resource scheduling apparatus is configured to:

when load of the data write requests is greater than a first upper threshold of load, adding one or more new first nodes to the writer cluster, and/or, adding one or more new shards of the index in the writer cluster; or, when load of the data write requests is less than a first lower threshold of load, deleting one or more first nodes in the writer cluster.

**19.** The elastic-search system according to any one of claims 14 to 18, wherein the elastic-search system comprises a resource scheduling apparatus, and the resource scheduling apparatus is configured to:

after the one or more new first nodes are added to the writer cluster, migrating one or more shards of the index from one or more old first nodes to the one or more new first nodes in the writer cluster; or, before the one or more first nodes are deleted in the writer cluster, migrating one or more shards of the index from one or more to-be-deleted first nodes to other first nodes in the writer cluster.

**20.** The elastic-search system according to claim 19, wherein a policy of migrating a shard in the writer cluster is a load balancing policy.

**21.** The elastic-search system according to claim 19 or 20, wherein the resource scheduling apparatus is configured to migrate one or more shards of the index from one or more old first nodes to the one or more new first nodes in the writer cluster, by:
migrating a target shard of the index from the old first node to the new first node, wherein the target shard satisfes at least one of the following conditions:

an amount of data written into the target shard is less than a first threshold; and a total quantity of shards distributed in an old first node in which the target shard is located is greater than a second threshold.

**22.** The elastic-search system according to any one of claims 14 to 21, wherein the elastic-search system comprises a resource scheduling apparatus, and the resource scheduling apparatus is configured to:

when load of the data read requests is greater than a second upper threshold of load, adding one or more new second nodes to the reader cluster, and/or, adding one or more new replicas of the index in the reader cluster; or, when load of the data read requests is less than a second lower threshold of load, deleting one or more second nodes in the reader cluster.

**23.** The elastic-search system according to any one of claims 14 to 22, wherein the elastic-search system comprises a resource scheduling apparatus, and the resource scheduling apparatus is configured to:

after the one or more new second nodes are added to the reader cluster, migrating one or more replicas of the index from one or more old second nodes to the one or more new second nodes in the reader cluster; or, before the one or more second nodes are deleted in the reader cluster, migrating one or more replicas of the index from one or more to-be-deleted second nodes to other second nodes in the reader cluster.

**24.** The elastic-search system according to claim 23, wherein a policy of migrating a shard in the reader cluster is a load balancing policy.

**25.** The elastic-search system according to claim 23 or 24, wherein the resource scheduling apparatus is configured to migrate one or more replicas of the index from one or more old second nodes to the one or more new second nodes in the reader cluster, by:
migrating a target replica of the index from the old second node to the new second node, wherein the target replica satisfes at least one of the following conditions:

an amount of data written into the target replica is less than a third threshold; and a total quantity of shards distributed in an old second node in which the target replica is located is greater than a fourth threshold.

26. The elastic-search system according to any one of claims 14 to 25, wherein the load of the data write requests comprises a data write rate of the index; and/or, the load of the data read requests comprises a data read frequency of the index.

27. A computing device cluster, comprising at least one computing device, wherein each computing device comprises a processor and a memory; and
the processor in the at least one computing device is configured to execute instructions stored in the memory in the at least one computing device, so that the computing device cluster performs the method according to any one of claims 1 to 13.

FIG. 1

FIG. 2

```
┌──────────────────────────────────────────────────────────────┐
│                                                              │    101
│         Calculate a data write rate of a target index        │
│                                                              │
└──────────────────────────────────────────────────────────────┘
                               │
                               ▼
┌──────────────────────────────────────────────────────────────┐
│  Adjust a quantity of resources of nodes occupied by a       │    102
│  plurality of shards when the data write rate of the target  │
│  index falls outside a target rate range                     │
└──────────────────────────────────────────────────────────────┘
```

FIG. 3

```
┌──────────────────────────────────────────────────────────────┐
│  Newly add at least one second node to an ES cluster when a  │    102a1
│  data write rate of a target index is greater than an upper  │
│  limit of a target rate range                                │
└──────────────────────────────────────────────────────────────┘
                               │
                               ▼
┌──────────────────────────────────────────────────────────────┐
│  Migrate at least one shard in a plurality of shards to the  │    102a2
│  at least one second node                                    │
└──────────────────────────────────────────────────────────────┘
```

FIG. 4

FIG. 5

FIG. 6

FIG. 7

Determine at least one to-be-deleted first target node from a plurality of first nodes when a data write rate of a target index is less than a lower limit of a target rate range — 102b1

Migrate all shards distributed in the at least one first target node to a first node other than the at least one first target node — 102b2

Delete the at least one first target node — 102b3

FIG. 8

Client proxy

Node deletion notification

AASS

S1 — Node 1

S2 — Node 2

S3 — Node 3

S4 — Node 4

FIG. 9

EP 4 546 157 A2

FIG. 10

FIG. 11

FIG. 12

Newly add at least one third node to an ES cluster when remaining available duration of a spot resource used by a fourth target node is less than a duration threshold — 103

Migrate all shards in the fourth target node to the at least one third node — 104

Delete the fourth target node — 105

Calcuate a data read frequency of a target index — 106

Adjust a quantity of replicas included in the target index when the data read frequency of the target index falls outside a target frequency range — 107

FIG. 13

Global
scheduling

Client proxy

Node replacement policy

AASS

S1

S2

S3

S4

Node 1

Node 2

Node 3

Node 4

FIG. 14

Client proxy

AASS

+ +

S1

S2

S3

S4

S3

S4

Node 1

Node 2

Node 3

Node 4

Node 5

Node 6

FIG. 15

Client proxy

AASS

S1

Node 1

S2

Node 2

S3

Node 5

S4

Node 6

FIG. 16

AASS

AGW

Search process

Server SDK

Node 3

Search process

Server SDK

Node 1

Search process

Server SDK

Node 2

FIG. 17

FIG. 18

FIG. 19

FIG. 20

FIG. 21

EP 4 546 157 A2

FIG. 22

35

**REFERENCES CITED IN THE DESCRIPTION**

**Patent documents cited in the description**

- CN 202210510751

- CN 202210764591